# EUROPÄISCHE PATENTSCHRIFT

(11) **EP 2 831 549 B1**
(45) Veröffentlichungstag und Bekanntmachung des Hinweises auf die Patenterteilung: **02.12.2015**
(21) Anmeldenummer: 13704048.1
(22) Anmeldetag: 01.02.2013
(51) Int. Cl.: G01D 5/244, G01D 5/245, G01D 5/347, G01D 18/00, H02K 41/02, G01D 5/20

(54) **POSITIONSERFASSUNGSVORRICHTUNG UND VERFAHREN ZUM ERFASSEN EINER POSITION EINES BEWEGLICHEN ELEMENTS EINER ANTRIEBSVORRICHTUNG**
POSITION DETECTION DEVICE AND METHOD FOR DETECTING A POSITION OF A MOVABLE ELEMENT IN A DRIVE DEVICE
DISPOSITIF DE DÉTECTION DE POSITION ET PROCÉDÉ DE DÉTECTION D'UNE POSITION D'UN ÉLÉMENT MOBILE D'UN DISPOSITIF D'ENTRAÎNEMENT

(30) Priorität: 27.03.2012 DE 102012204917
(43) Veröffentlichungstag der Anmeldung: 04.02.2015
(73) Patentinhaber: Beckhoff Automation GmbH, 33415 Verl (DE)
(72) Erfinder: PRÜSSMEIER, Uwe, 32657 Lemgo (DE)
(74) Vertreter: Patentanwaltskanzlei WILHELM & BECK
(86) Internationale Anmeldenummer: PCT/EP2013/052068
(87) Internationale Veröffentlichungsnummer: WO 2013/143728

(56) Entgegenhaltungen:
- DE-A1- 10 300 918
- JP-A- H02 264 306
- JP-A- H11 173 872
- JP-A- 2000 055 647
- JP-A- 2003 247 861
- US-A1- 2002 104 716

## Beschreibung

Die Erfindung betrifft eine Positionserfassungsvorrichtung und ein Verfahren zum Erfassen einer Position eines beweglichen Elements einer Antriebsvorrichtung. Die Erfindung betrifft ferner ein Computerprogramm.

Aus der US 6,781,524 ist ein Positionserfassungssystem für Fahrzeuge bekannt, welche sich auf einer Fahrstrecke bewegen. Das bekannte System umfasst ein magnetisches Element, welches jeweils an den Fahrzeugen angeordnet ist. In der Fahrstrecke sind Sensorspulen angeordnet. Fährt nun ein Fahrzeug mit seinem magnetischen Element über eine solche Sensorspule, so wird in dieser mittels des magnetischen Elements ein magnetischer Fluss erzeugt. Der magnetische Fluss kann dann mittels Messung einer Sensorspulenspannung gemessen werden, so dass eine Anwesenheit des Fahrzeugs über der Sensorspule detektiert werden kann.

Nachteilig hieran ist beispielsweise, dass eine erhebliche Zeit vergeht, bis eine Fahrzeugposition basierend auf der gemessenen Sensorspulenspannung bestimmt werden kann. Das liegt insbesondere darin begründet, dass ein kontinuierliches periodisches Spannungssignal an die Sensorspule gelegt wird, so dass zwecks Positionsbestimmung nur ein kontinuierliches Messsignal zur Verfügung steht, wobei hier die Einhüllende des Messsignals über mehrere Perioden gemessen wird, was erheblich Zeit beansprucht.

Aus der US 2002/0049553 A1 ist ein Linearmotor umfassend einen Stator und einen Läufer bekannt. Der Läufer umfasst mehrere Permanentmagnete. Der Stator umfasst zwei von einander beabstandete Hall-Sensoren zur Positionserfassung des Läufers und zur Ermittlung eines Positionsfehlers des Läufers. Nachteilig an dem bekannten Aufbau ist insbesondere, dass bautechnisch unbekannte Abstände zwischen Sensorelementen nicht ermittelt werden können.

Nachteilig an bekannten Systemen ist weiterhin, dass zwischen zwei Sensorspulen bautechnisch bedingt ein Abstand gebildet ist, welcher in der Regel nicht bekannt ist bzw. welcher sich während des Betriebs ändern kann. Beispielsweise kann eine Änderung der Temperatur bewirken, dass sich ein Abstand zwischen zwei Sensorspulen oder den beiden Hall-Sensoren ändert. Ein nicht genau bekannter Abstand führt aber in der Regel dazu, dass eine Position des Fahrzeugs öder des Läufers nicht exakt bestimmt werden kann. Dies kann weiterhin dazu führen, dass eine Bewegung des Fahrzeugs oder des Läufers Unstetigkeiten aufweist, also beispielsweise ruckartige Bewegungen durchführt. Es ist somit keine Steuerung einer gleichförmigen Bewegung der Fahrzeuge oder des Läufers möglich.

Stand der Technik ist der DE10300918, US2002104716, JP2003247861, JPH11173872, JPH02264306 und JP2000055647 zu entnehmen.

Die der Erfindung zugrunde liegende Aufgabe kann daher darin gesehen werden, eine Positionserfassungsvorrichtung und ein Verfahren zum Erfassen einer Position eines beweglichen Elements einer Antriebsvorrichtung anzugeben, welche die bekannten Nachteile überwinden und eine zuverlässige Positionserfassung ermöglichen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird eine Positionserfassungsvorrichtung zum Erfassen einer Position eines beweglichen Elements einer Antriebsvorrichtung bereitgestellt. Die Positionserfassungsvorrichtung umfasst einen Träger, wobei der Träger zwei in einem vorbestimmten Abstand nebeneinander und überlappungsfrei angeordnete Erfassungsmodule zum Erfassen einer Position des beweglichen Elements aufweist. Ferner sind die Erfassungsmodule ausgebildet, bei einer Erfassung des beweglichen Elements ein Positionssignal auszugeben. Das heißt also insbesondere, dass jedes der beiden Erfassungsmodule bei einer Erfassung des beweglichen Elements ein entsprechendes Positionssignal ausgibt. Bei einer Verlagerung des beweglichen Elements entlang der zwei Erfassungsmodule über den vorbestimmten Abstand ist somit basierend auf den Positionssignalen der vorbestimmte Abstand als Referenzabstand ausmessbar.

Nach einem anderen Aspekt wird ein Verfahren zum Erfassen einer Position eines beweglichen Elements einer Antriebsvorrichtung mittels der vorgenannten Positionserfassungsvorrichtung bereitgestellt. Hierbei wird das bewegliche Element entlang der zwei Erfassungsmodule über den vorbestimmten Abstand verlagert. Ferner werden während der Verlagerung jeweilige Positionssignale der zwei Erfassungsmodule gemessen. Basierend auf den Positionssignalen wird der vorbestimmte Abstand als Referenzabstand ausgemessen.

Gemäß einem weiteren Aspekt wird ein Computerprogramm bereitgestellt, welches Programmcode zur Ausführung des vorgenannten Verfahrens umfasst, wenn das Computerprogramm auf einem Computer ausgeführt wird.

Die Erfindung umfasst also insbesondere den Gedanken, einen vorbestimmten Abstand zwischen zwei Erfassüngsmodulen vorzusehen und diesen als Referenz auszumessen. Für dieses Ausmessen werden die jeweiligen Positionssignale verwendet, welche mittels der beiden Erfassungsmodule ausgegeben werden, wenn diese bei der Verlagerung des beweglichen Elements das bewegliche Element erfassen. Es kann somit in vorteilhafter Weise eine Korrelation zwischen den Positionssignalen, insbesondere zwischen weiterverarbeiteten Positionssignalen, und dem vorbestimmten Abstand durchgeführt werden. Da dieser vorbestimmte Abstand bekannt ist, kann durch diese Ausmessung ein Referenzabstand definiert bzw. festgelegt werden.

Wenn nun zwei solcher Träger vorgesehen sind, wie es in den unabhängigen Ansprüchen definiert ist, welche nebeneinander entlang einer Fahrstrecke des beweglichen Elements angeordnet sind, so ist hier in der Regel ein Abstand zwischen den beiden Trägern gebildet. Dieser Abstand ist üblicherweise aus baulichen Gründen nicht bekannt bzw. ändert sich während eines Betriebs. Beispielsweise kann sich der Abstand aufgrund von Temperaturschwankungen ändern. Weiterhin können auch Montagetoleranzen verantwortlich dafür sein, dass ein Abstand zwischen zwei Trägern nicht immer gleich ist.

Wenn das bewegliche Element entlang des ersten Trägers fährt, so liefern die entsprechenden Erfassungsmodule des ersten Trägers Positionssignale. Wenn dann das bewegliche Element weiter zu dem zweiten Träger fährt, so wird der zweite Träger mit seinen entsprechenden Erfassungsmodulen ebenfalls Positionssignale ausgeben. Es stehen also Positionssignale des ersten Trägers und Positionssignale des zweiten Trägers für eine Positionsbestimmung zur Verfügung. Da zwischen den beiden Trägern ein Abstand vorgesehen ist, wird dieser Einfluss auf die Positionssignale nehmen.

Wenn der Abstand zwischen beiden Trägern beispielsweise gleich dem vorbestimmten Abstand zwischen zwei Erfassungsmodulen eines Trägers ist, so wird in der Regel kein Unterschied zwischen den entsprechenden Positionssignalen festgestellt werden können.

Wenn aber die Abstände unterschiedlich sind, so findet eine Abweichung in den Positionssignalen statt. Da aber erfindungsgemäß eine Korrelation zwischen einem Abstand und einem Positionssignal durch Ausmessen des vorbestimmten Abstands durchgeführt wurde, das heißt also beispielsweise, dass die Positionssignale geeicht wurden, kann ein Rückschluss aus den Positionssignalen der beiden Träger auf den unbekannten Abstand durchgeführt werden. Änderungen im Abstand zwischen zwei Trägern können aufgrund der Referenzmessung des vorbestimmten Abstands zwischen zwei Erfassungsmodulen eines Trägers rechnerisch kompensiert werden, so dass stets eine aktuelle Position des beweglichen Elements festgestellt werden kann. Insbesondere kann ferner in vorteilhafter Weise ein Absolutwert eines Abstands zwischen zwei Trägern aufgrund dieser Referenzmessung bestimmt werden.

Es findet also insbesondere insofern ein Vergleich zwischen Positionssignalen statt, welche bei einer Verlagerung des beweglichen Elements von einem Träger zum nächsten Träger einerseits und welche bei der Verlagerung des beweglichen Elements zwischen zwei Erfassungsmodulen eines Trägers andererseits gemessen wurden.

Gemäß einer Ausführungsform der Erfindung kann vorgesehen sein, dass der Träger eine viereckige Form aufweist. Dies bewirkt in vorteilhafter Weise eine einfache Fertigung des Trägers. Ferner ist in vorteilhafter Weise eine einfache Montage von mehreren Trägern hintereinander ermöglicht. Dies insbesondere im Vergleich zu bekannten Systemen mit Trägern, welche eine Stufenform aufweisen.

Nach einer weiteren Ausführungsform der Erfindung kann vorgesehen sein, dass der Träger als Leiterplatte ausgebildet ist. Eine Leiterplatte im Sinne der vorliegenden Erfindung ist insbesondere ein Träger für elektronische Bauteile. Eine Leiterplatte im Sinne der vorliegenden Erfindung ist insbesondere ausgebildet, elektronische Bauteile mechanisch zu befestigen und elektrisch zu verbinden beziehungsweise zu kontaktieren. Eine Leiterplatte im Sinne der vorliegenden Erfindung kann insbesondere als eine Leiterkarte, eine Platine oder als eine gedruckte Schaltung gebildet sein. Im Englischen wird der Begriff "printed circuit board" für den deutschen Begriff Leiterplatte verwendet. Eine Leiterplatte im Sinne der vorliegenden Erfindung umfasst insbesondere ein elektrisch isolierendes Material mit elektrisch leitenden Verbindungen, welche vorzugsweise an dem elektrisch isolierenden Material angeordnet, vorzugsweise haften, können. Diese elektrisch leitenden Verbindungen können vorzugsweise auch als Leiterbahnen bezeichnet werden. Vorzugsweise umfasst die Leiterplatte als elektrisch isolierendes Material einen Kunststoff, insbesondere einen faserverstärkten Kunststoff. Durch das Vorsehen eines faserverstärkten Kunststoffes wird in vorteilhafter Weise in zumindest einer Vorzugsrichtung, insbesondere in mehreren Vorzugsrichtungen, eine besonders hohe mechanische Stabilität der Leiterplatte bewirkt. Vorzugsweise kann vorgesehen sein, dass die Leiterbahnen, also die elektrisch leitenden Verbindungen, in dem elektrisch isolierenden Material eingebettet sind. Somit sind die elektrischen Leiterbahnen gegen äußere Einflüsse in vorteilhafter Weise geschützt. Insbesondere ist so auch in vorteilhafter Weise eine elektrische Kurzschlussgefahr verringert, wenn nicht gar vermieden, insofern die elektrischen Leiterbahnen mittels des elektrisch isolierenden Materials zum einen voneinander und zum anderen auch von weiteren elektrisch leitenden Bauteilen isoliert sind.

In einer weiteren Ausführungsform der Erfindung kann vorgesehen sein, dass der Träger einen benachbart zu den Erfassüngsmodulen gebildeten und entlang des ersten Erfassungsmoduls über den vorbestimmten Abstand zum zweiten Erfassungsmodul verlaufenden Erfassungsbereich aufweist, in welchem ein weiteres Erfassungsmodul zum Erfassen einer Position des beweglichen Elements angeordnet ist, welches ausgebildet ist, bei einer Erfassung des beweglichen Elements ein Positionssignal auszugeben.

Der Träger weist somit in vorteilhafter Weise noch ein drittes Erfassungsmodul, das weitere Erfassungsmodul, auf, so dass in vorteilhafter Weise bezüglich einer Positionserfassung Redundanz gegeben ist. Bei einem Ausfall des Erfassungsmoduls oder der beiden Erfassungsmodule ist immer noch eine Positionserfassung mittels des weiteren Erfassungsmoduls ermöglicht. Ferner ist in vorteilhafter Weise eine Unterscheidung von mehreren beweglichen Elementen wie folgt möglich. Hierbei sind bewegliche Elemente vorgesehen, die Abmessungen und/oder Materialien aufweisen derart, dass sie bei der Verlagerung außerhalb des Erfassungsbereichs des weiteren Erfassungsmoduls liegen bzw. aufgrund der Materialien von dem weiteren Erfassungsmodul nicht erfasst werden können. Weiterhin sind bewegliche Elemente vorgesehen, welche Abmessungen und/oder Materialien aufweisen derart, dass sie bei der Verlagerung noch zusätzlich zu einem jeweiligen Erfassungsbereich des ersten Erfassungsmoduls und des zweiten Erfassungsmoduls im Erfassungsbereich des weiteren Erfassungsmoduls liegen bzw. aufgrund der verwendeten Materialien von dem weiteren Erfassungsmodul erfasst werden können. Diese letzteren beweglichen Elemente bewirken somit insbesondere, dass alle drei Erfassungsmodule Positionssignale ausgeben. Bewegliche Elemente, welche nur von dem ersten und dem zweiten Erfassungsmodul erfasst werden können, nicht aber auch von dem weiteren Erfassungsmodul, bewirken insbesondere, dass nur die beiden Erfassungsmodule, nicht aber das weitere Erfassungsmodul ein Positionssignal ausgeben. Es kann somit in vorteilhafter Weise zwischen unterschiedlichen beweglichen Elementen unterschieden werden.

Gemäß einer anderen Ausführungsform der Erfindung kann vorgesehen sein, dass die Erfassungsmodule jeweils eine Erregerspule und eine der Erregerspule zugeordnete Empfangsspule mit einer eine Periode aufweisenden Geometrie umfassen. D.h. also insbesondere, dass sowohl das erste Erfassungsmodul, als auch das zweite Erfassungsmodul, als auch das weitere Erfassungsmodul die vorgenannten Erreger- und Empfangsspulen aufweisen können. Insbesondere können mehrere Empfangsspulen vorgesehen sein, welche jeweils einer Erregerspule zugeordnet sind. Die Empfangsspulen können vorzugsweise gleich oder unterschiedlich gebildet sein.

Es ist somit in vorteilhafter Weise insbesondere ermöglicht, einen elektrischen Erregerimpuls, vorzugsweise einen Spannungsimpuls, auf die Erregerspule zu beaufschlagen. Dieser Erregerimpuls induziert eine elektrische Spannung in der Empfangsspule. Diese induzierte Empfangsspulenspannung kann gemessen werden, d.h. also es wird die elektrische Spannung gemessen, welche an der Empfangsspule anliegt. Basierend auf der gemessenen Empfangsspulenspannung kann in vorteilhafter Weise die Position des beweglichen Elements bestimmt werden. Bewegt sich das bewegliche Element über die Empfangsspule, so wird dies beispielsweise einen Maximalwert des zeitlichen Spulenspannungsverlaufs in der Empfangsspule ändern. Diese Änderung, welche sich insbesondere durch eine Messung der induzierten Spulenspannung zeigt, wird zur Bestimmung der Position des beweglichen Elements herangezogen. Wenn sich kein bewegliches Element über die Empfangsspule bewegt, wird die elektromagnetische Kopplung zwischen Erregerspule und Empfangsspule nicht gestört und die induzierten Spulenspannungen heben sich auf, so dass die gemessene Empfangsspulenspannung zu 0 wird.

Nach einer Ausführungsform der Erfindung wird eine Differenzspannung der Empfangsspule gemessen. Eine Spule im Sinne der Erfindung weist insbesondere ein Spulenanfang und ein Spulenende auf, wobei eine Differenzspannung insbesondere zwischen dem Spulenanfang und dem Spulenende gemessen wird. Vorzugsweise umfasst eine Spule, dass heißt eine Erregerspule und/oder eine Empfangsspule, n Wicklungen, wobei n für die Anzahl der Wicklungen steht. In einer weiteren Ausführungsform der Erfindung wird das Spulenende oder der Spulenanfang auf Masse gelegt, wobei dann insbesondere eine Spannung zwischen dem Spulenanfang respektive Spulenende gemessen wird, was einer Differenzspannung der Spule entspricht. Über die gemessene Differenzspannung ist es insbesondere ermöglicht, auf die Position des beweglichen Elements zu schließen. Hierbei wird beispielsweise eine mathematische Funktion zur Berechnung der Position basierend auf der gemessenen Differenzspannung verwendet.

Nach einer Ausführungsform der Erfindung weist die Empfangsspule eine sinusförmige oder cosinusförmige Geometrie auf. Insbesondere kann die Empfangsspule auch eine dreiecksförmige Geometrie aufweisen. Eine solche Geometrie bedeutet insbesondere, dass der maximale Wert der induzierten Spannung in der Empfängerspule abgebildet über der Position des beweglichen Elementes einen cosinusförmigen bzw. sinusförmigen oder dreiecksförmigen zeitlichen Verlauf aufweist. Solche Geometrien können insbesondere mittels entsprechender Wicklungsanordnungen realisiert werden. Wenn mehrere Empfangsspulen vorgesehen sind, können diese beispielsweise eine sinus- bzw. cosinusförmige Geometrie aufweisen, welche insbesondere um 90° versetzt zueinander angeordnet sind. Das heißt, dass eine Phasendifferenz der jeweiligen induzierten Spulenspannungen 90° beträgt. Vorzugsweise kann eine solche Phasenverschiebung aber auch verschieden von 90° betragen.

Vorzugsweise beträgt bei einer sinusförmigen bzw. cosinusförmigen Geometrie eine Anzahl von Sinuswellen bzw. Cosinuswellen mindestens eins, insbesondere zwei, vorzugsweise drei. Dadurch ist in vorteilhafter Weise eine einfache Spulenwicklung ermöglicht. Ferner ist dennoch ein gutes Signal-zu-Rausch-Verhältnis gegeben.

Ein Erregerimpuls in Sinne der Erfindung weist insbesondere eine begrenzte zeitliche Dauer auf. Vorzugsweise liegt die zeitliche Dauer im Mikrosekundenbereich. Vorzugsweise kann eine zeitliche Dauer des elektrischen Erregerimpulses auch kleiner als 1000 µs, insbesondere kleiner als 100 µs, insbesondere kleiner als 10 ps betragen. Je kürzer der elektrische Erregerimpuls ist, desto kürzer ist auch eine zeitliche Dauer der induzierten Spulenspannung in der Empfangsspule. Weiterhin kann dadurch auch insbesondere in vorteilhafter Weise eine elektromagnetische Störung in einer benachbarten Erregerspule oder Empfangsspule vermieden werden. Dadurch kann eine Positionsbestimmung besonders empfindlich durchgeführt werden.

Gemäß einer bevorzugten Ausführungsform der Erfindung können mehrere elektrische Erregerimpulse auf die Erregerspule beaufschlagt werden. Somit ist es in vorteilhafter Weise ermöglicht, mehrere Positionsmessungen nacheinander durchzuführen. Ein Verfahrweg des beweglichen Elements kann insofern in vorteilhafter weise verfolgt werden. Allgemein kann ein elektrischer Erregerimpuls auch als ein elektrisch gepulstes Erregersignal bezeichnet werden. Ein zeitlicher Abstand zwischen zwei elektrischen Erregerimpulsen bzw. zwei gepulsten Erregersignalen kann beispielsweise 20 µs betragen. Vorzugsweise werden die elektrischen Erregerimpulse mit einer Wiederholfrequenz von 1 kHz bis 1 MHz beaufschlagt. Eine zeitliche Dauer des Erregerimpulses kann auch insbesondere zwischen 600 ns und 2000 ns liegen, wobei vorzugsweise der Erregerimpuls eine zeitliche Dauer von etwa 600 ns oder etwa 2000 ns aufweist.

Gemäß einer beispielhaften Ausführungsform der Erfindung können auch mehrere, insbesondere zwei, beispielsweise vier, vorzugsweise acht, Empfangsspulen einer Erregerspule zugeordnet sein. Nach einer weiteren Ausführungsform der Erfindung können auch mehrere Erregerspulen, insbesondere zwei, beispielsweise drei, insbesondere vier, Erregerspulen, vorgesehen sein. Insbesondere das Vorsehen von mehreren Empfangsspulen ermöglicht in vorteilhafter Weise eine besonders genaue Positionsbestimmung des beweglichen Elements, da mittels entsprechender mathematischer Auswertung der gemessenen Differenzspannungen die relative Position des beweglichen Elements zu den Empfangsspulen bestimmt werden kann. Wenn mehrere Empfangsspulen vorgesehen sind, kann vorzugsweise eine Differenzspannung bezogen auf eine Empfangsspule gemessen werden. Es kann zusätzlich oder anstelle insbesondere auch eine Differenzspannung zwischen zwei Empfangsspulen gemessen werden. Das heißt insbesondere, dass eine Differenzspannung der einen Empfangsspule und eine Differenzspannung der anderen Empfangsspule gemessen wird, wobei diese beiden gemessenen Differenzspannungen vorzugsweise über eine mathematische Funktion miteinander verrechnet werden. Basierend auf diesen gemessenen Differenzspannungen kann in vorteilhafter Weise die Position des beweglichen Elements der Antriebsvorrichtung bestimmt werden.

Beispielsweise kann eine Differenzspannung bzw. eine Differenz zwischen zwei gemessenen Differenzspannungen etwa 0 V betragen. Dies ist insbesondere der Fall, wenn die elektromagnetischen Felder der Empfangsspulen nicht durch die Anwesenheit des beweglichen Elements gestört werden, was insbesondere der Fall ist, wenn sich das bewegliche Element nicht in der Nähe der Empfangsspulen, beispielsweise über den Empfangsspulen, befindet. Eine Differenzspannung bzw. eine Differenz zwischen zwei gemessenen Differenzspannungen beträgt insbesondere dann nicht 0 V, ist also ungleich 0 V, wenn das bewegliche Element die elektromagnetischen Felder in den Empfangsspulen stört. Eine solche Störung tritt insbesondere dann ein, wenn sich das bewegliche Element in der Nähe der Empfangsspulen befindet, beispielsweise über den Empfängerspulen. Insbesondere kann aufgrund der speziellen Spulenanordnung, der Phasenverschiebungen und der Form der Empfangsspulen eine mathematische Funktion zur Berechnung der Position herangezogen werden.

Nach einer Ausführungsform der Erfindung können die Empfangsspulen auch paarweise der Erregerspule zugeordnet werden. Sie bilden also Empfangsspulenpaare. In diesem Fall wird für jedes Empfangsspulenpaar eine Differenzspannung gemessen. Somit ist es in vorteilhafter Weise ermöglicht, auch über eine längere Verfahrstrecke bzw. Wegstrecke des beweglichen Elements seine Position kontinuierlich zu messen.

Eine Position im Sinne der Erfindung kann insbesondere eine Position in einem Koordinatensystem, insbesondere in einem kartesischen Koordinatensystem sein. Eine Position des beweglichen Elements kann also mittels einer X-, einer Y- und/oder einer Z-Koordinate beschrieben werden. Vorzugsweise kann eine Position des beweglichen Elements auch mittels Kugelkoordinaten beschrieben werden. Insbesondere wenn es sich bei dem beweglichen Element um ein sich rotierendes bewegliches Element handelt, kann eine Position auch einen Drehwinkel umfassen. Das heißt insbesondere, dass ein Drehwinkel des sich rotierenden Elements bestimmt wird.

Gemäß einer bevorzugten Ausführungsform der Erfindung kann bzw. können eine Erregerspule und/oder eine oder mehrere Empfangsspule als eine oder mehrere Leiterbahnen auf einer Platine bzw. Leiterplatte gebildet werden bzw. sein. Das heißt insbesondere, dass auf einer Platine Leiterbahnen derart gebildet sind, dass diese eine Spule bilden. Durch das Vorsehen einer solchen Platine ist somit eine besonders einfache elektrische Kontaktierung der Spulen ermöglicht. Vorzugsweise ist eine solche Leiterplatte identisch mit dem Träger. Das heißt also insbesondere, dass der Träger als Leiterplatte bzw. Platine gebildet ist, wobei die Spulen als Leiterbahnen der Leiterplatte gebildet sind.

Gemäß einer Ausführungsform weist die Erregerspule eine Rechteckform auf, wobei bevorzugter Weise die Empfangsspule bzw. die Empfangsspulen in der Rechteckform angeordnet ist bzw. sind. Allgemein kann eine Wicklung der Erregerspule auch als eine Erregerwicklung bezeichnet werden. Allgemein kann eine Wicklung der Empfangsspule auch als eine Empfangswicklung bezeichnet werden.

Gemäß einer bevorzugten Ausführungsform der Erfindung wird die gemessene Empfangsspulenspannung für eine digitale Weiterverarbeitung unmittelbar abgetastet und unmittelbar digitalisiert. Somit ist in vorteilhafter Weise keine analoge Demodulation über das Erregersignal mehr notwendig. Es können so insbesondere Abtastfrequenzen von einigen kHz, beispielsweise 50 kHz, erreicht werden. Im bekannten Stand der Technik wird das gemessene analoge Spannungssignal für eine Kreuzkorrelation mit dem analogen Erregerspannungssignal verwendet. Erst das analoge Signal, das aus der Kreuzkorrelation resultiert, wird digitalisiert. Im Gegensatz dazu werden aber in dieser bevorzugten Ausführungsform der Erfindung die gemessenen Empfangsspulenspannungen direkt digitalisiert und erst dann weiterverarbeitet, was erheblich schnellere Positionsberechnungen ermöglicht. Vor einer eventuellen Weiterverarbeitung findet also zunächst eine Abtastung und Digitalisierung der Rohdaten, also der gemessenen Empfangsspulenspannungen, statt.

In einer anderen Ausführungsform der Erfindung kann vorgesehen sein, dass die Erfassungsmodule jeweils mehrere nebeneinander angeordnete Empfangsspulen aufweisen. Dadurch ist in vorteilhafter Weise eine noch genauere Positionserfassung des beweglichen Elements dahingehend ermöglicht, dass eine Aussage darüber getroffen werden kann, wo genau sich das bewegliche Element relativ zu dem Erfassungsmodul befindet. Hier werden vorzugsweise die Empfangsspulen jeweils einzeln ausgewertet.

In einer anderen Ausführungsform der Erfindung kann vorgesehen sein, dass eine Breite der Erregerspule mindestens 2,5 Perioden beträgt. Somit können in vorteilhafter Weise Empfangsspulen mit zumindest zwei Sinuswellen bzw. Cosinuswellen, also Wellen mit einer Länge von 2 Perioden, vorgesehen sein, so dass ein gutes Signal-zu-Rausch-Verhältnis bewirkt ist.

In einer bevorzugten Ausführungsform der Erfindung umfasst das bewegliche Element zumindest ein Bauteil mit elektrisch leitenden Bereichen zum elektromagnetischen Stören des in der Empfangsspule bzw. den Empfangsspulen induzierten elektromagnetischen Feldes. Das heißt also insbesondere, dass in einer Ausführungsform die Positionserfassungsvorrichtung das bewegliche Element umfasst. Die elektrisch leitenden Bereiche können vorzugsweise gleich oder unterschiedlich gebildet sein.

Die vorgenannte Störung ist insbesondere in der gemessenen Empfangsspulenspannung sichtbar, so dass die Anwesenheit des beweglichen Elements im Bereich der Empfangsspule festgestellt werden kann. Falls ein solches Störsignal nicht vorliegt, kann gefolgert werden, dass sich kein bewegliches Element im Bereich der Empfangsspule befindet.

Das Bauteil kann vorzugsweise als ein Körper, insbesondere ein rechteckiger Körper, gebildet sein, insbesondere als eine Platine bzw. Leiterplatte. Ein elektrisch leitender Bereich ist vorzugsweise aus einem elektrisch leitenden Material gebildet. Das heißt also insbesondere, dass das Bauteil einen Bereich aufweist, welcher aus einem elektrisch leitenden Material gebildet ist. Vorzugsweise ist ein elektrisch leitender Bereich mittels Metallisierung einer Oberfläche des Bauteils gebildet. Das heißt also insbesondere, dass das Bauteil Oberflächenbereiche aufweist, welche metallisiert sind. Ein Störsignal ist insbesondere abhängig von einer Anzahl der elektrisch leitenden Bereiche, so dass diesbezügliche Unterschiede auch zu unterschiedlichen Störsignalen führen, was wiederum zu unterschiedlichen induzierten Spulenspannungen führt. Es kann also einem entsprechenden gemessenen Spulensignal ein konkretes Bauteil zugeordnet werden, wodurch in vorteilhafter Weise eine Identifikation des beweglichen Elements ermöglicht ist. Da insofern eine Dämpfung der induzierten Spulenspannungen aufgrund des Bauteils bewirkt ist, kann dieses vorzugsweise als Dämpferplatine bezeichnet werden.

In einer weiteren Ausführungsform der Erfindung kann vorgesehen sein, dass die elektrisch leitenden Bereiche des Bauteils jeweils eine Breite von einer halben Periode aufweisen, wobei vorzugsweise ein jeweiliger Abstand zwischen zwei Bereichen eine halbe Periode beträgt. Dadurch wird in vorteilhafter Weise bewirkt, dass die elektrisch leitenden Bereiche entweder vollständig den positiven oder den negativen Anteil der Sinuswellen bzw. Cosinuswellen überdecken können. Dadurch wird ein besonders gutes Signal-zu-Rausch-Verhältnis bewirkt.

Nach noch einer weiteren Ausführungsform der Erfindung kann vorgesehen sein, dass ein weiterer elektrisch leitender Bereich gebildet ist, welcher unterhalb der elektrisch leitenden Bereiche dem weiteren Erfassungsbereich gegenüberliegend angeordnet ist. Dadurch kann in vorteilhafter Weise der weitere elektrisch leitende Bereich vom weiteren Erfassungsmodul erfasst werden, insofern der weitere elektrisch leitende Bereich ein Störsignal in der induzierten Spannung der Empfangsspule des weiteren Erfassungsmoduls bewirkt. Die im Zusammenhang mit den elektrischen Bereichen gemachten Ausführungen gelten analog für den weiteren elektrischen Bereich.

Gemäß einer anderen Ausführungsform der Erfindung kann vorgesehen sein, dass eine Länge des beweglichen Elements, insbesondere des Bauteils, größer als der vorbestimmte Abstand ist. Dadurch können in vorteilhafter Weise kontinuierlich Positionssignale gemessen werden, da entweder das bewegliche Element vom ersten Erfassungsmodul, vom zweiten Erfassungsmodul oder von beiden Erfassungsmodulen erfasst wird.

Nach noch einer anderen Ausführungsform der Erfindung kann vorgesehen sein, dass basierend auf den Positionssignalen eine Orientierung des beweglichen Elements, insbesondere des Bauteils, relativ zu einer Verlagerungsrichtung bestimmt wird. Es kann somit in vorteilhafter Weise erkannt werden, ob das bewegliche Element bzw. das Bauteil beispielsweise verkippt ist. Die so bestimmte Orientierung kann in vorteilhafter Weise für weitere Berechnungen und darauf basierende Steuerungsbefehle verwendet werden.

In einer weiteren beispielhaften Ausführungsform weist die Antriebsvorrichtung einen Linearmotor auf, welcher das bewegliche Element verlagern kann. In einem solchem Fall wird insbesondere eine Linearposition des beweglichen Elements bestimmt. Vorzugsweise ist das bewegliche Element als ein Schlitten bzw. Fahrzeug gebildet, welcher mittels des Linearmotors verlagert werden kann. Insbesondere sind an dem Schlitten ein oder mehrere Bauteile zwecks Positionserfassung angeordnet. Eine solche Antriebsvorrichtung kann auch als ein lineares Transportsystem bezeichnet werden.

Vorzugsweise sind mehrere Schlitten vorgesehen, welche mittels des Linearmotors verlagert werden können. Insbesondere können auch mehrere Linearmotoren vorgesehen sein. Die Schlitten können insbesondere jeweils ein Bauteil aufweisen. Hierbei können die Bauteile gleich oder unterschiedlich gebildet sein. Es kann vorzugsweise auch vorgesehen sein, dass ein oder mehrere Schlitten auch jeweils mehrere Bauteile aufweisen. Beispielsweise kann ein Schlitten zwei Bauteile aufweisen. Aufgrund der unterschiedlichen Störsignale, welche die verschiedenen Bauteile in der Empfangsspule bewirken, ist in vorteilhafter Weise eine Identifikation der einzelnen Schlitten bzw. Fahrzeuge ermöglicht. Die Schlitten weisen insofern eine eigene Kennung auf. Sie können also eindeutig voneinander unterschieden werden. Diese eindeutige Kennung ermöglicht weiterhin insbesondere, dass gezielt Verschleißerscheinungen an den einzelnen Schlitten überwacht werden können.

Die Erfindung wird im Folgenden anhand von bevorzugten Ausführungsbeispielen näher erläutert. Hierbei zeigen
- Fig. 1: eine Positionserfassungsvorrichtung,
- Fig. 2: ein Ablaufdiagramm eines Verfahrens zum Erfassen einer Position eines beweglichen Elements einer Antriebsvorrichtung,
- Fig. 3: eine weitere Positionserfassungsvorrichtung,
- Fig. 4: ein Bauteil mit elektrisch leitenden Bereichen,
- Fig. 5: Wicklungen einer Empfangsspule,
- Fig. 6 bis 8: eine Verlagerung des Bauteils gemäß Fig. 4 entlang der Positionserfassungsvorrichtung gemäß Fig. 3,
- Fig. 9: eine sinusförmige Empfarigsspule mit drei Perioden,
- Fig. 10: eine vergrößerte Teilansicht der beiden Erfassungsmodule der Positionserfassungsvorrichtung gemäß Fig. 3,
- Fig. 11: mehrere nebeneinander angeordnete Positionserfassungsvorrichtungen,
- Fig. 12: ein weiteres Bauteil mit elektrisch leitenden Bereichen,
- Fig. 13: ein anderes Bauteil mit elektrisch leitenden Bereichen,
- Fig. 14 und 15: eine Verlagerung des Bauteils gemäß Fig. 12 entlang einer Positionserfassungsvorrichtung umfassend einen Erfassungsbereich,
- Fig. 16: eine Verlagerung des Bauteils gemäß Fig. 12 entlang der Positionserfassungsvorrichtung gemäß Fig. 14 und 15, wobei zusätzlich noch ein graphischer Verlauf eines Positionssignals über die Wegstrecke gezeigt ist,
- Fig. 17: eine Verlagerung des Bauteils gemäß Fig. 12 entlang zweier Positionserfassungsvorrichtungen gemäß Fig. 14 bis 16, welche nebeneinander angeordnet sind, wobei zusätzlich noch ein graphischer Verlauf eines Positionssignals über die Wegstrecke gezeigt ist,
- Fig. 18: eine Verlagerung des Bauteils gemäß Fig. 12 entlang der Positionserfassungsvorrichtung gemäß Fig. 14 bis 17, wobei das Bauteil relativ zu der Verlagerungsrichtung verkippt ist, wobei zusätzlich ein graphischer Verlauf eines Positionssignals über die Wegstrecke gezeigt ist,
- Fig. 19: ein lineares Transportsystem,
- Fig. 20: eine Ansicht einer Abwandlung des linearen Transportsystems gemäß Fig. 19,
- Fig. 21: eine weitere Ansicht des linearen Transportsystems gemäß Fig. 20,
- Fig. 22: ein anderes Bauteil,
- Fig. 23: eine weitere Ansicht des linearen Transportsystems gemäß Fig. 20,
- Fig. 24: eine weitere Ansicht des linearen Transportsystems gemäß Fig. 23,
- Fig. 25: eine Ansicht eines bogenförmig ausgebildeten linearen Transportsystems und
- Fig. 26: eine weitere Ansicht des bogenförmig ausgebildeten linearen Transportsystems gemäß Fig. 25.

Im Folgenden können für gleiche Merkmale gleiche Bezugszeichen verwendet werden. Wo es der Übersichtlichkeit dient, sind nicht immer sämtliche Bezugszeichen eingezeichnet.

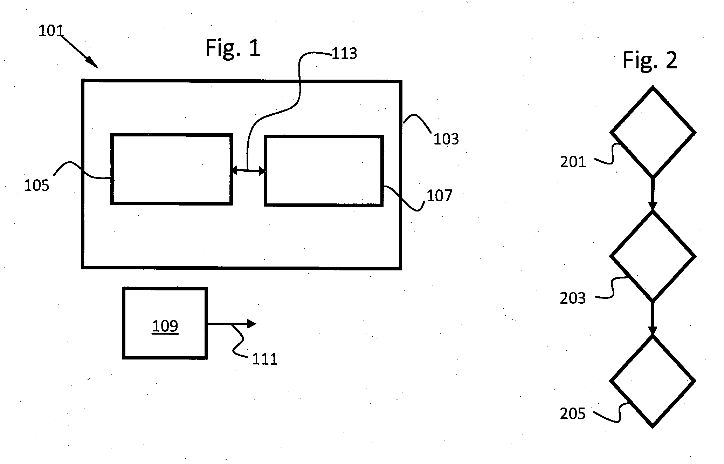

Fig. 1 zeigt eine Positionserfassungsvorrichtung 101 zum Erfassen einer Position eines beweglichen Elements 109 einer Antriebsvorrichtung (nicht gezeigt).

Die Positionserfassungsvorrichtung 101 umfasst einen Träger 103, wobei der Träger 103 zwei Erfassungsmodule 105 und 107 aufweist. Die beiden Erfassungsmodule 105 und 107 sind ausgebildet, bei einer Erfassung des beweglichen Elements 109 ein Positionssignal auszugeben. Eine Verlagerung des beweglichen Elements 109 entlang der Positionserfassungsvorrichtung 101 ist mittels eines Pfeils mit dem Bezugszeichen 111 symbolisch gekennzeichnet.

Die beiden Erfassungsmodule 105 und 107 sind in einem vorbestimmten Abstand nebeneinander und überlappungsfrei an dem Träger 103 angeordnet. Der vorbestimmte Abstand zwischen den beiden Erfassungsmodulen 105 und 107 ist mittels eines Doppelpfeils mit dem Bezugszeichen 113 gekennzeichnet.

Bei einer Verlagerung des beweglichen Elements 109 entlang des ersten Erfassungsmoduls 105 über den vorbestimmten Abstand 113 und entlang des zweiten Erfassungsmoduls 107 werden entsprechende Positionssignale der beiden Erfassungsmodule 105 und 107 gemessen, sodass basierend auf diesen Positionssignalen der vorbestimmte Abstand 113 als Referenzabstand ausmessbar ist bzw. ausgemessen werden kann. Es kann somit in vorteilhafter Weise eine Korrelation zwischen Positionssignalen einerseits und dem vorbestimmten Abstand 113 andererseits gebildet werden. In der Regel ist der vorbestimmte Abstand 113 bekannt, sodass auch eine Absoluteichung der Positionssignale möglich ist. Wenn nun eine weitere Positionserfassungsvorrichtung neben der Positionserfassungsvorrichtung 101 angeordnet wird, so wird bauartbedingt ein Abstand zwischen den beiden Positionserfassungsvorrichtungen gebildet sein. Zum Einen ist dieser Abstand in der Regel aufgrund von Montagetoleranzen nicht bekannt, zum Anderen kann sich dieser Abstand beispielsweise auch aufgrund von Temperaturschwankungen in einem Betrieb der Antriebsvorrichtung ändern. Eine genaue Positionserfassung bzw. Positionsbestimmung des beweglichen Elements 109 entlang seiner Wegstrecke bzw. Fahrstrecke ist somit nicht mehr möglich. Da aber der vorbestimmte Abstand 113 als Referenzabstand ausgemessen wurde, reicht es, die Positionssignale der jeweiligen Erfassungsmodule der beiden Positionserfassungsvorrichtungen zu messen, wenn das bewegliche Element 109 sich von der Positionserfassungsvorrichtung 101 zu der weiteren Positionserfassungsvorrichtung verlagert. Aus diesen Positionssignalen kann dann basierend auf den Referenzabstand bzw. den entsprechenden Positionssignalen, welche für die Referenzmessung verwendet wurden, der Abstand zwischen den beiden Positionserfassungsvorrichtungen genau bestimmt bzw. ausgemessen werden bzw. eine Änderung in diesem Abstand kann rechnerisch kompensiert werden.

Fig. 2 zeigt ein Ablaufdiagramm eines Verfahrens zum Erfassen einer Position eines beweglichen Elements einer Antriebsvorrichtung mittels einer Positionserfassungsvorrichtung. Bei der Positionserfassungsvorrichtung kann es sich beispielsweise um die Positionserfassungsvorrichtung 101 gemäß Fig. 1 handeln.

Gemäß einem Schritt 201 wird das bewegliche Element entlang der zwei Erfassungsmodule über den vorbestimmten Abstand verlagert. Gemäß einem Schritt 203 werden die jeweiligen Positionssignale der beiden Erfassungsmodule während der Verlagerung gemessen. Basierend auf diesen Positionssignalen kann dann der vorbestimmte Abstand zwischen den beiden Erfassungsmodulen in einem Schritt 205 als Referenzabstand ausgemessen werden.

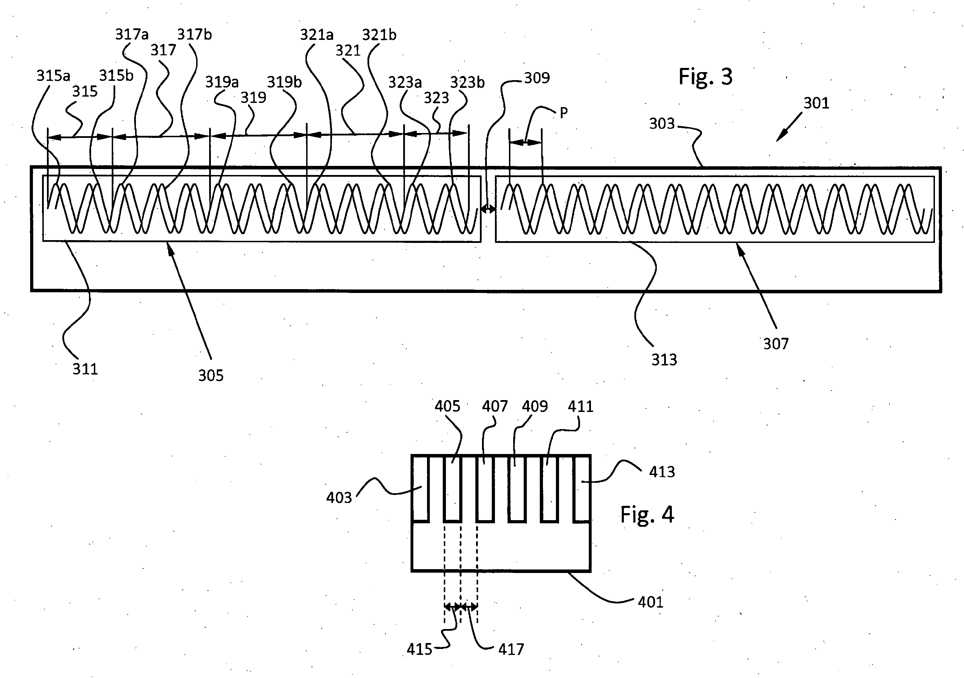

Fig. 3 zeigt eine weitere Positionserfassungsvorrichtung 301.

Die Positionserfassungsvorrichtung 301 umfasst einen rechteckigen Träger 303, welcher vorzugsweise als Leiterplatte ausgebildet sein kann. An dem Träger 303 sind zwei Erfassungsmodule 305 und 307 nebeneinander, überlappungsfrei und beabstandet voneinander angeordnet. Dieser vorbestimmte Abstand zwischen den beiden Erfassungsmodulen 305 und 307 ist mittels eines Doppelpfeils mit dem Bezugszeichen 309 gekennzeichnet.

Beide Erfassungsmodule 305 und 307 sind identisch gebildet, sodass im Folgenden nur das Erfassungsmodul 305 näher beschrieben wird. Ferner sind die hierfür verwendeten Bezugszeichen hauptsächlich nur für die entsprechenden Elemente für das Erfassungsmodul 305 zwecks besserer Übersichtlichkeit eingezeichnet.

Das Erfassungsmodul 305 umfasst eine Erregerspule 311, welche eine Vierecksform aufweist. Innerhalb der viereckigen Erregerspule 311 sind mehrere Empfangsspulenpaare 315, 317, 319, 321 und 323 gebildet. Hierbei sind die Empfangsspulenpaare 315, 317, 319, 321, 323 nebeneinander angeordnet. Die Empfangsspulenpaare 315, 317, 319, 321, 323 weisen eine periodische Geometrie auf, konkret gemäß Fig. 3 eine sinusförmige bzw. cosinusförmige Geometrie. Eine Periode dieser Geometrie wird im Folgenden mit "P" bezeichnet.

Die gemäß Fig. 3 bezüglich des Erfassungsmoduls 305 eingezeichneten Doppelpfeile und Begrenzungslinien kennzeichnen symbolisch Anfang und Ende des jeweiligen Empfangsspulenpaares.

Das Empfangsspulenpaar 315 ist gebildet aus einer sinusförmigen Wicklung bzw. Spule 315a und einer cosinusförmigen Wicklung bzw. Spule 315b. Das Empfangsspulenpaar 317 ist gebildet aus einer sinusförmigen Wicklung bzw. Spule 317a und einer cosinusförmigen Wicklung bzw. Spule 317b. Das Empfangsspulenpaar 319 ist gebildet aus einer sinusförmigen Wicklung bzw. Spule 319a und einer cosinusförmigen Wicklung bzw. Spule 319b. Das Empfangsspulenpaar 321 ist gebildet aus einer sinusförmigen Wicklung bzw. Spule 321a und einer cosinusförmigen Wicklung bzw. Spule 321b. Das Empfangsspulenpaar 323 ist gebildet aus einer sinusförmigen Wicklung bzw. Spule 323a und einer cosinusförmigen Wicklung bzw. Spule 323b.

Spulen bzw. Wicklungen mit einer sinusförmigen Geometrie können allgemein vorzugsweise als eine Sinusspule bzw. Sinuswicklung bezeichnet werden. Spulen bzw. Wicklungen mit einer cosinusförmigen Geometrie können allgemein vorzugsweise als eine Cosinusspule bzw. Cosinuswicklung bezeichnet werden.

Die beiden Empfangsspulenpaare 315 und 323 bzw. die entsprechenden sinus- und kosinusförmigen Wicklungen bzw. Spulen weisen jeweils zwei Perioden P auf. Die Wicklungen bzw. Spulen der Empfangsspulenpaare 317, 319, 323 weisen jeweils drei Perioden P auf.

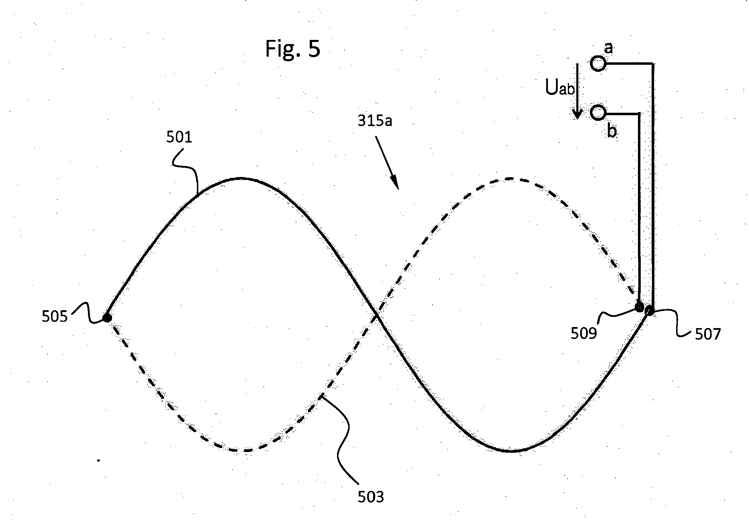

Eine schematische Darstellung einer solchen Wicklung bzw. Spule eines Empfangsspulenpaares wird ausführlicher in Fig. 5 beschrieben.

Fig. 4 zeigt ein rechteckiges Bauteil 401 umfassend elektrisch leitende Bereiche 403, 405, 407, 409, 411 und 413, welche identisch gebildet sind und eine Rechtecksform aufweisen. Eine Breite dieser Bereiche ist schematisch mit einem Doppelpfeil mit dem Bezugszeichen 415 gekennzeichnet. Ein Abstand zwischen zwei elektrisch leitenden Bereichen ist schematisch mittels eines Doppelpfeils mit dem Bezugszeichen 417 gekennzeichnet.

Die sechs elektrisch leitenden Bereiche 403, 405, 407, 409, 411 und 413 sind parallel zueinander kammartig angeordnet, wobei eine jeweilige Breite 415 der elektrisch leitenden Bereiche 403, 405, 407, 409, 411 und 413 eine halbe Periode P beträgt. Der Abstand 417 zwischen zwei elektrisch leitenden Bereichen beträgt ebenfalls eine halbe Periode P.

Diese elektrisch leitenden Bereiche 403, 405, 407, 409, 411 und 413 können beispielsweise als ein metallisierter Oberflächenbereich gebildet sein. Das heißt also insbesondere, dass das Bauteil 401 in seiner Oberfläche an den entsprechenden Stellen metallisiert wurde bzw. ist.

Das Bauteil 401 kann beispielsweise an ein Fahrzeug bzw. an einen Schlitten angeordnet werden, welcher mittels der Antriebsvorrichtung entlang einer Wegstrecke bzw. Fahrstrecke verlagert wird. Die Positionserfassungsvorrichtung 301 ist dann ebenfalls entlang der Wegstrecke angeordnet, sodass bei einer Verlagerung des Fahrzeugs entlang der Wegstrecke sich das Bauteil 401 entlang der Positionserfassungsvorrichtung 301 verlagert. Bei einem Beaufschlagen der Erregerspulen 311 und 313 werden entsprechende Spannungen in den einzelnen Empfangsspulenpaaren 315, 317, 319, 321, 323 induziert, das heißt also in den entsprechenden cosinus- und sinusförmigen Wicklungen. Wenn nun das Bauteil 401 sich entlang der Wicklungen verlagert, so werden die elektrisch leitenden Bereiche 403, 405, 407, 409, 411 und 413 mit den entsprechend der induzierten Spannungen gebildeten Magnetfelder wechselwirken, was sich in einer Änderung der induzierten Spannungen zeigt. Diese Änderung kann gemessen werden und basierend darauf kann eine Positionsbestimmung des Bauteils 401 und somit des Fahrzeugs durchgeführt werden.

Fig. 5 zeigt eine schematische Darstellung der Sinuswicklung bzw. der Sinusspule 315a des Empfangsspulenpaares 315. Die Sinuswicklung ist vorzugsweise als Leiterbahn auf dem Träger 303 gebildet. Hierbei sind eine "positive" sinusförmige Leiterbahn 503 und eine "negative" sinusförmige Leiterbahn 501 vorgesehen. Die Leiterbahn 501 ist vorzugsweise in einer ersten Lage angeordnet, die Leiterbahn 503 ist vorzugsweise in einer zweiten Lage angeordnet. Beide Leiterbahnen 501 und 503 sind an einem Punkt 505 durchkontaktiert und miteinander verbunden. Der Verbindungspunkt 505 kann auch als eine Durchkontaktierung bezeichnet werden.

Die Leiterbahn 501 weist ein erstes Wicklungsende 507 auf. Die Leiterbahn 503 weist ein zweites Wicklungsende 509 auf. An den beiden Wicklungsenden 507 und 509 wird eine Differenzspannung der Sinuswicklung 315a gemessen. Die Differenzspannung kann als U_{ab} bezeichnet werden, wobei "a" für das erste Wicklungsende 507 steht und "b" für das zweite Wicklungsende 509 steht.

Vorzugsweise wird der Punkt "b", also das zweite Wicklungsende 509, auf Masse gelegt. Dann wird vorzugsweise eine an dem Punkt "a" anliegende Spannung auch gegen Masse gemessen, so dass auch in diesem Fall eine Differenzspannung U_{ab} der Sinuswicklung 315a gemessen wird.

Im Folgenden soll kurz das Messprinzip für eine Positionserfassung des Bauteils 401 bei einer Verlagerung des Bauteils 401 entlang der Positionserfassungsvorrichtung 301 näher erläutert werden.

Die Erregerspulen 311 und 313 der beiden Erfassungsmodule 305 und 307 werden mit einer Wechselspannung gespeist, wobei eine Ausgangsspannung der Empfangsspulenpaare 315, 317, 319, 321 und 323, d. h. also insbesondere der sinus- und cosinusförmigen Wicklungen, gemessen wird. Die Differenz zwischen den Ausgangsspannungen, beispielsweise U_{ab}, ist annähernd 0, wenn die Felder der Spulen nicht durch elektrisch leitende Gegenstände, beispielsweise den elektrisch leitenden Bereichen des Bauteils 401, gestört werden. Fährt nun ein Schlitten umfassend das Bauteils 401 entlang der Wegstrecke über die Spulen, so wird eine Differenzspannung in den Wicklungen der Empfangsspulenpaare 315, 317, 319, 321, 323 und/oder zwischen den Wicklungen der Empfangsspulenpaare 315, 317, 319, 321, 323 gemessen. Über diese Differenzspannung ist es möglich, auf die Position des Bauteils 401 und somit auf den Schlitten zu schließen. Aufgrund der speziellen Anordnung, der Phasenverschiebung und der Form der Wicklungen der Empfangsspulenpaare 315, 317, 319, 321, 323 kann eine mathematische Funktion zur Berechnung der Position herangezogen werden. Die Frequenz der Wechselspannung, die die Erregerspulen 311 und 313 speist, liegt vorzugsweise im Bereich von 100 KHz bis 10 MHz.

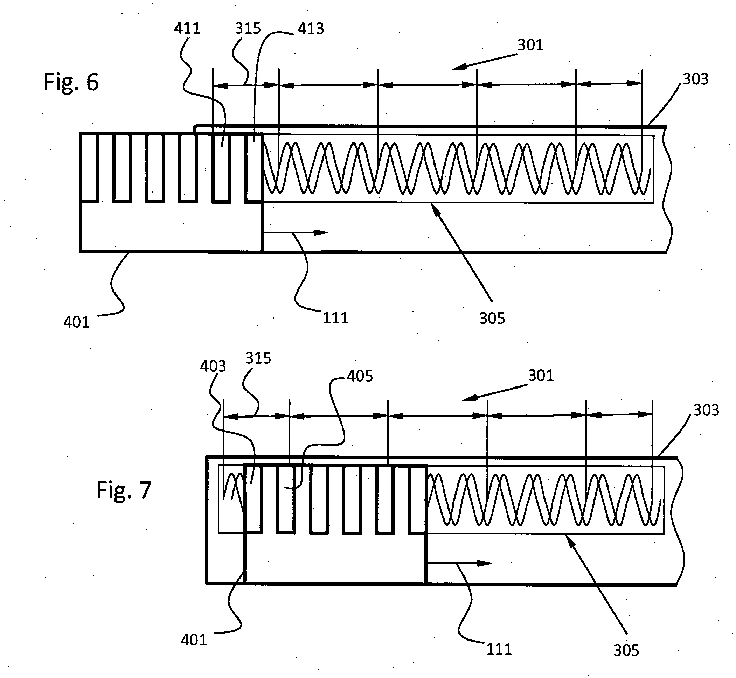

Fig. 6 bis 8 zeigen jeweils eine Verlagerung des Bauteils 401 gemäß Fig. 4 entlang der Positionserfassungsvorrichtung 301 gemäß Fig. 3. Hierbei zeigen die Ansichten gemäß Fig. 6 und 7 zwecks Übersichtlichkeit eine abgeschnittene Positionserfassungsvorrichtung 301.

Fig. 6 zeigt eine Position des Bauteils 401 relativ zu der Positionserfassungsvorrichtung 301 derart, dass lediglich die elektrisch leitenden Bereiche 411 und 413 dem Empfangsspulenpaar 315 gegenüberliegt. Das heißt also insbesondere, dass lediglich die elektrisch leitenden Bereiche 411 und 413 die induzierte Spannung in den cosinus- und sinusförmigen Wicklungen 315a und 315b stören. Aufgrund der Breite von einer halben Periode P der elektrisch leitenden Bereiche sowie einem Abstand von ebenfalls einer halben Periode P überdecken die beiden elektrisch leitenden Bereiche 411 und 413, wobei dies auch für die anderen elektrisch leitenden Bereiche 403, 405, 407 und 409 bei entsprechender Überdeckung gilt, entweder vollständig den positiven oder vollständig den negativen Anteil der sinus- bzw. cosinusförmigen Wicklungen. Dadurch wird in vorteilhafter Weise ein besonders gutes Signal bzw. ein besonderes gutes Signal-zu-Rausch-Verhältnis bewirkt.

Die in Fig. 6 gezeigte Position des Bauteils 401 relativ zu der Positionserfassungsvorrichtung 301 zeigt die Position, an der ein ausreichend gutes erstes Positionssignal aus dem Empfangsspulenpaar 315 gemessen werden kann.

Fig. 7 zeigt die letzte Position des Bauteils 401 relativ zu der Positionserfassungsvorrichtung 301, in welcher die Wicklungen 315a und 315b des Empfangsspulenpaares 315 noch ein Positionsmesssignal ausgeben, da hier noch die beiden elektrisch leitenden Bereiche 403, 405 den entsprechenden Wicklungen gegenüberliegen und entsprechende Störungen bewirken. Sobald aber die elektrisch leitenden Bereiche 403 und 405 aufgrund der Verlagerung 111 den Wicklungen des Empfangsspulenpaares 315 nicht mehr gegenüberliegen, stören die elektrisch leitenden Bereiche 403 und 405 nicht mehr ein entsprechendes magnetisches Feld, sodass dann auch kein Positionssignal mehr ausgegeben werden kann.

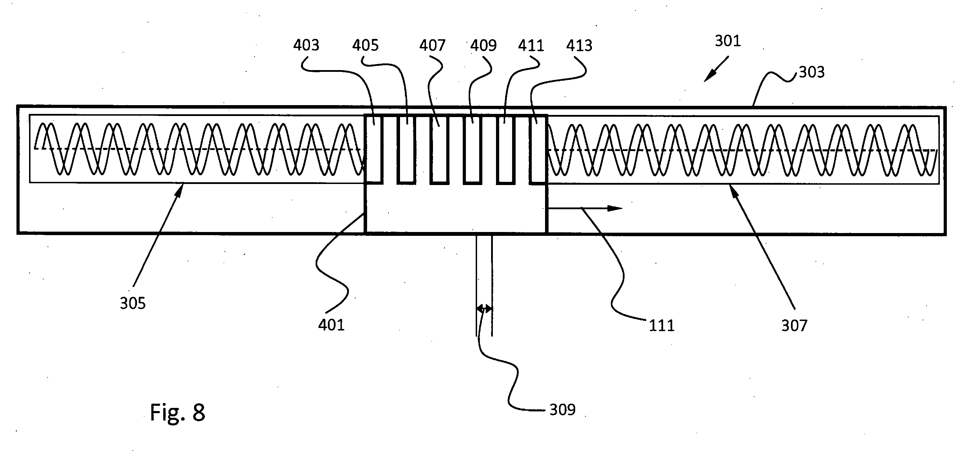

Fig. 8 zeigt das Bauteil 401, während es über den vorbestimmten Abstand 309 zwischen den beiden Erfassungsmodulen 305 und 307 verfahren bzw. verlagert wird. Aufgrund der Tatsache, dass das Bauteil 401 eine Länge aufweist, welche größer ist als der vorbestimmte Abstand 309, werden sowohl Positionssignale aus dem Erfassungsmodul 305 als auch aus dem Erfassungsmodul 307 ausgegeben. Im Einzelnen überdecken bereits die elektrisch leitenden Bereiche 411 und 413 entsprechende Wicklungen des Erfassungsmoduls 307, wohingegen die elektrisch leitenden Bereiche 403, 405 und 407 noch Wicklungen des Erfassungsmoduls 305 überdecken, sodass in beiden Erfassungsmodulen 305 und 307 eine Änderung einer Spulenspannung gemessen werden kann, sodass basierend darauf entsprechende Positionssignale ausgegeben werden können.

Es ist somit in vorteilhafter Weise eine kontinuierliche Positionsbestimmung ermöglicht, da entweder aus dem Erfassungsmodul 305, aus dem Erfassungsmodul 307 oder aus beiden Erfassungsmodulen entsprechende Positionssignale ausgegeben werden können.

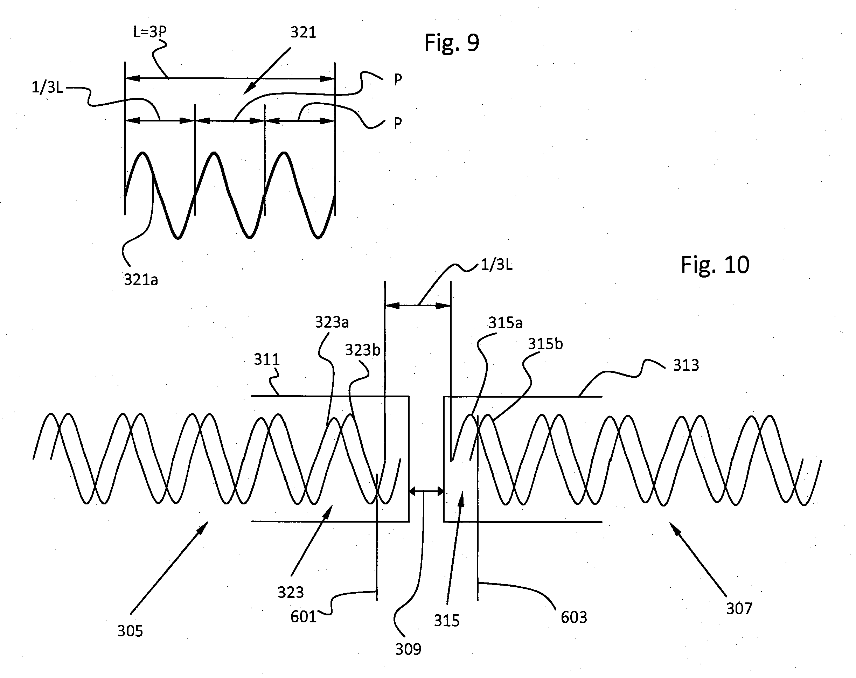

Fig. 9 zeigt in einer Einzelansicht die Sinuswicklung 321a des Empfangsspulenpaares 321. Hierbei weist die Sinuswicklung 321a drei Perioden P auf. Eine Länge L der Sinuswicklung 321a beträgt insofern drei Perioden P.

Fig. 10 zeigt eine vergrößerte Ansicht eines Ausschnitts der beiden Erfassungsmodule 305 und 307.

Mit dem Bezugszeichen 601 ist die Position gekennzeichnet, an welcher noch ein Positionssignal ausgegeben werden kann seitens des Empfangsspulenpaares 323, da nach dieser Position eine Störung der induzierten Spulenspannung seitens der elektrisch leitenden Bereiche zu gering bis gar nicht mehr vorhanden ist, um ein ausreichend starkes Positionssignal auszubilden.

Das Bezugszeichen 603 kennzeichnet die Position, an der in dem Erfassungsmodul 307 ein erstes Positionssignal ausgegeben werden kann, wenn das Bauteil mit seinen elektrischen Bereichen über die entsprechenden Wicklungen des Empfangsspulenpaares 315 fährt.

Ein Abstand zwischen diesen beiden Positionen 601 und 603 beträgt hier ein Drittel von der Länge L.

Sowohl der Abstand zwischen den Positionen 601 und 602 als auch der vorbestimmte Abstand 309 als auch der jeweilige Abstand der Positionen 601 und 602 zu jeweiligen Seiten der Erfassungsmodule 305 und 307, welche einander in dem vorbestimmten Abstand 309 gegenüberliegen, sind in der Regel bekannt, sodass diese mittels Messung der entsprechenden Positionssignale als Referenz ausgemessen werden können.

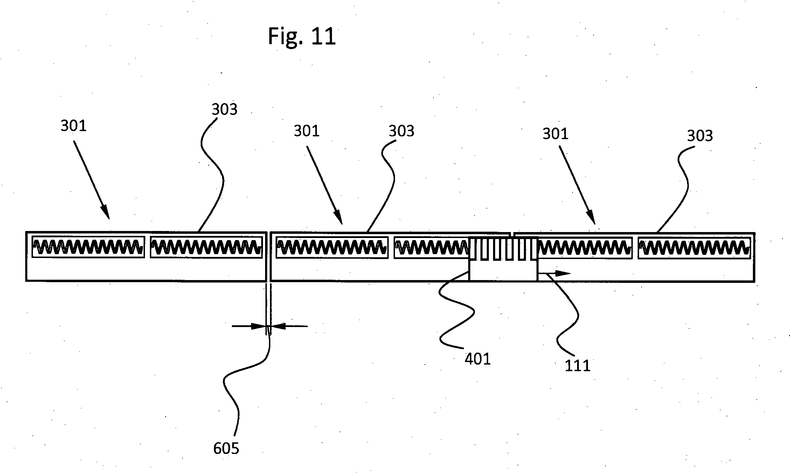

Fig. 11 zeigt eine Verlagerung des Bauteils 401 entlang mehrerer nebeneinander angeordneter Positionserfassungsvorrichtungen 301, welche jeweils in einem Abstand 605 angeordnet sind. Dieser Abstand 605 ist in der Regel nicht bekannt, kann aber insofern bestimmt werden, als das bei einer Überfahrt des Bauteils 401 von einer Positionserfassungsvorrichtung 301 zur nächsten Positionssignale der entsprechenden Erfassungsmodule der einzelnen Positionserfassungsvorrichtungen 301 gemessen werden, wobei diese Positionssignale dann mit den Positionssignalen verglichen werden, welche bei einer Überfahrt des Bauteils 401 über den vorbestimmten Abstand 309 zwischen zwei Erfassungsmodulen einer Positionserfassungsvorrichtung 301 gemessen wurden.

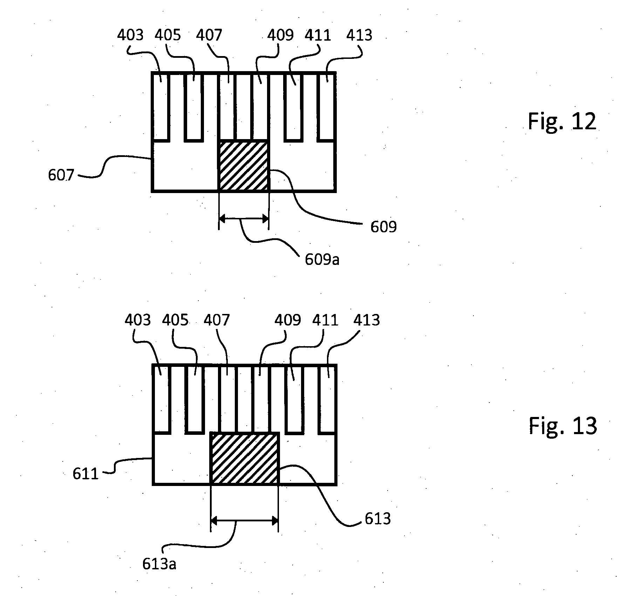

Fig. 12 zeigt ein weiteres Bauteil 607, welches im Wesentlichen analog zu dem Bauteil 401 gemäß Fig. 4 gebildet ist. Als ein Unterschied weist das Bauteil 607 unterhalb der beiden elektrisch leitenden Bereichen 407 und 409 einen weiteren elektrischen Bereich 609 auf. Eine Breite des Weiteren elektrischen Bereichs 609 ist mittels eines Doppelpfeils mit dem Bezugszeichen 609a gekennzeichnet, wobei die Breite 609a vorzugsweise 1,5 Perioden beträgt.

Fig. 13 zeigt ein anderes Bauteil 611, welches im Wesentlichen analog zu dem Bauteil 607 gemäß Fig. 12 gebildet ist. Hier ist ebenfalls ein weiterer elektrischer Bereich unterhalb der beiden elektrisch leitenden Bereiche 407, 409 gebildet. Dieser ist in Fig. 13 mit den Bezugszeichen 613 gekennzeichnet. Eine entsprechende Breite ist mittels eines Doppelpfeils mit dem Bezugszeichen 613a gekennzeichnet. Als ein Unterschied beträgt hier eine Breite 613a des Weiteren elektrisch leitenden Bereichs 613 vorzugsweise zwei Perioden.

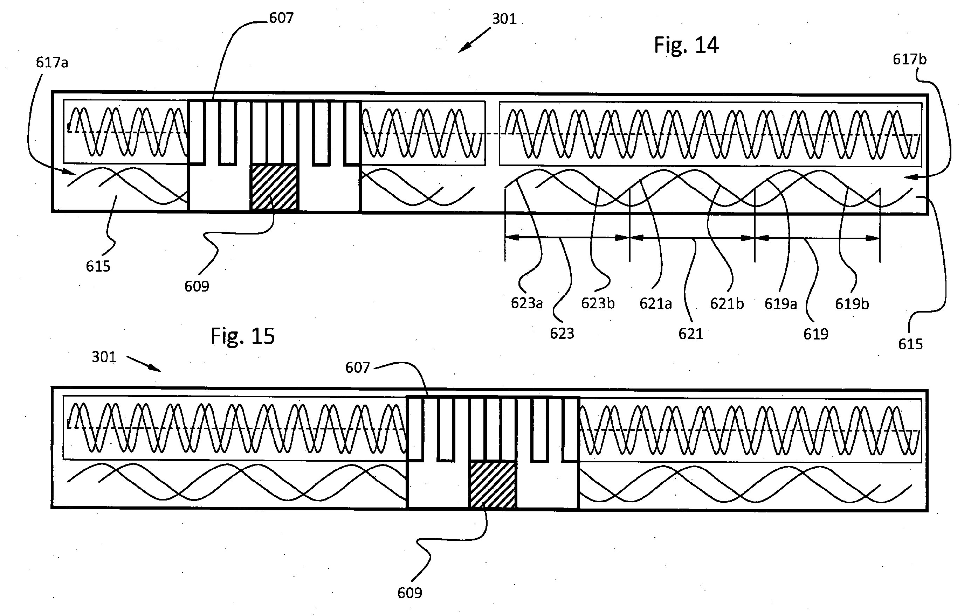

Diese unterschiedlich gebildeten elektrisch leitenden Bereiche 609 und 613 der Bauteile 607 und 611 gemäß Fig. 12 und 13 ermöglichen eine eindeutige Erkennung der Bauteile 607 und 611. Dies wird im Folgenden unter Bezugnahme auf die Fig. 14 und 15 näher erläutert.

Fig. 14 und 15 zeigen eine Verlagerung des Bauteils 607 entlang einer Positionserfassungsvorrichtung 301. Die folgenden Ausführungen gelten analog für eine Verlagerung des Bauteils 611.

Die Positionserfassungsvorrichtung 301 ist im Wesentlichen analog zu der Positionserfassungsvorrichtung 301 gemäß Fig. 3 gebildet. Als einen Unterschied weist die Positionserfassungsvorrichtung 301 gemäß Fig. 14 und 15 zwei weitere Erfassungsmodule 617a und 617b in einem Erfassungsbereich 615 auf, welcher unterhalb der beiden Erfassungsmodule 305 und 307 gebildet ist.

Die zwei weiteren Erfassungsmodule 617a und 617b verlaufen jeweils unterhalb und entlang der beiden Erfassungsmodule 305 und 307. Beide weiteren Erfassungsmodule 617a und 617b sind gleich gebildet, sodass im Folgenden nur das weitere Erfassungsmodul 617b näher beschrieben wird.

Das weitere Erfassungsmodul 617b umfasst drei Empfangsspülenpaare 619, 621 und 623. Jedes der Empfangsspulenpaare 619, 621, 623 umfasst analog zu den Empfangsspulenpaaren der Erfassungsmodule 305 und 307 jeweils eine Sinuswicklung 619a respektive 621a respektive 623a sowie eine Cosinuswicklung 619b respektive 621b respektive 623b. Ferner sind analog zu den Erfassungsmodulen 305 und 307 Doppelpfeile und Begrenzungslinien eingezeichnet, um einen Anfang und ein Ende der Empfangsspulenpaare zu kennzeichnen.

In einer hier nicht gezeigten Erregerspule des weiteren Erfassungsmoduls 617b wird eine Wechselspannung beaufschlagt, sodass hierüber eine elektrische Spannung in den einzelnen Wicklungen des weiteren Erfassungsmoduls 617b induziert wird. Wenn nun das Bauteil 607 entlang der Positionserfassungsvorrichtung 301 fährt, so wird der weitere elektrisch leitende Bereich 609 den Wicklungen des weiteren Erfassungsmoduls 617a respektive 617b gegenüberliegen und dadurch die entsprechend induzierte Spannung in den Wicklungen stören. Diese Störung ist mittels Messen der Spannung erfassbar, wobei hier diese Störung insbesondere abhängig von der Form, insbesondere der Breite 609a, des weiteren elektrischen Bereichs 609 ist.

Das heißt also insbesondere, dass der weitere elektrisch leitende Bereich 609 des Bauteils 607 eine andere Störung verursacht als der weitere elektrisch leitende Bereich 613 des Bauteils 611 gemäß Fig. 13. Insofern ist dadurch in vorteilhafter Weise eine Unterscheidung der beiden Bauteile 607 und 611 ermöglicht. Darüber hinaus können die Bauteile 607 und 611 auch von solchen Bauteilen unterschieden werden, welche analog zu dem Bauteil 401 gemäß Fig. 4 keinen weiteren elektrischen Bereich aufweisen, da diese Bauteile lediglich eine Störung in den Erfassungsmodulen 305 und 307 bewirken, nicht jedoch eine Störung in den weiteren Erfassungsmodulen 617a, 617b.

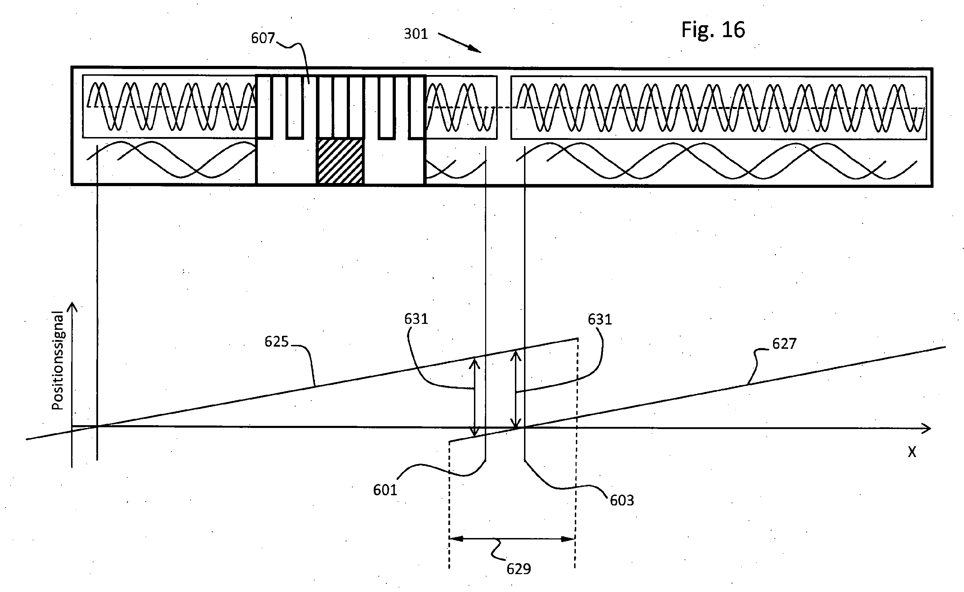

Fig. 16 zeigt die gleiche Darstellung gemäß Fig. 14, wobei zusätzlich eine graphische Darstellung des Positionssignals über eine Wegstrecke (x) dargestellt ist.

Hierbei basiert das Positionssignal der Abszisse auf der Messung der Spulenspannungen in den einzelnen Wicklungen der beiden Erfassungsmodule 305 und 307.

Gezeigt sind zwei Geraden mit den Bezugszeichen 625, 627, wobei die Gerade 625 dem entsprechenden Verlauf des Positionssignals entspricht, welches mittels des Erfassungsmoduls 305 ausgegeben wurde. Die Kurve bzw. Gerade mit dem Bezugszeichen 627 entspricht dem Verlauf des Positionssignals, welches mittels des Erfassungsmoduls 307 ausgegeben wurde. Aufgrund der entsprechenden Breite des Bauteils 607 sowie der entsprechend angepassten Lücke bzw. dem Abstand 309 zwischen den beiden Erfassungsmodulen 305 und 307 wird zu jeder Position x des Bauteils 607 ein Positionssignal ausgegeben. Ein Überlappungsbereich, in welchem sowohl das Erfassungsmodul 305 als auch das Erfassungsmodul 307 ein entsprechendes Positionssignal ausgibt, ist mittels eines Doppelpfeils mit dem Bezugszeichen 629 gekennzeichnet. Eine Differenz zwischen den beiden Kurven 625 und 627 innerhalb des Überlappungsbereichs 629 ist mit zwei Doppelpfeilen mit dem Bezugszeichen 631 gekennzeichnet.

An der Stelle bzw. Position x, an welcher die Kurve 625 beginnt, hat der elektrisch leitende Bereich 413 die erste Wicklung des Erfassungsmoduls 305 überfahren. An der Position x, an welcher die Kurve 625 endet, hat der elektrisch leitende Bereich 403 die letzte Wicklung des Erfassungsmoduls 305 überfahren. An der Position x, an welcher die Kurve 627 beginnt, hat der elektrisch leitende Bereich 413 zum ersten Mal eine Wicklung des Erfassungsmoduls 307 überfahren. An der Position x, an der die Kurve 627 endet, hat der elektrisch leitende Bereich 403 die letzte Wicklung des Erfassungsmoduls 307 überfahren.

Die Differenz 631 zwischen den beiden Geraden 625, 627 entspricht hier dem vorbestimmten Abstand 309 zwischen den beiden Erfassungsmodulen 305 und 307. Da dieser in der Regel bekannt ist, kann so eine Korrelation zwischen Positionssignalwerten und realem Abstand 309 gebildet werden.

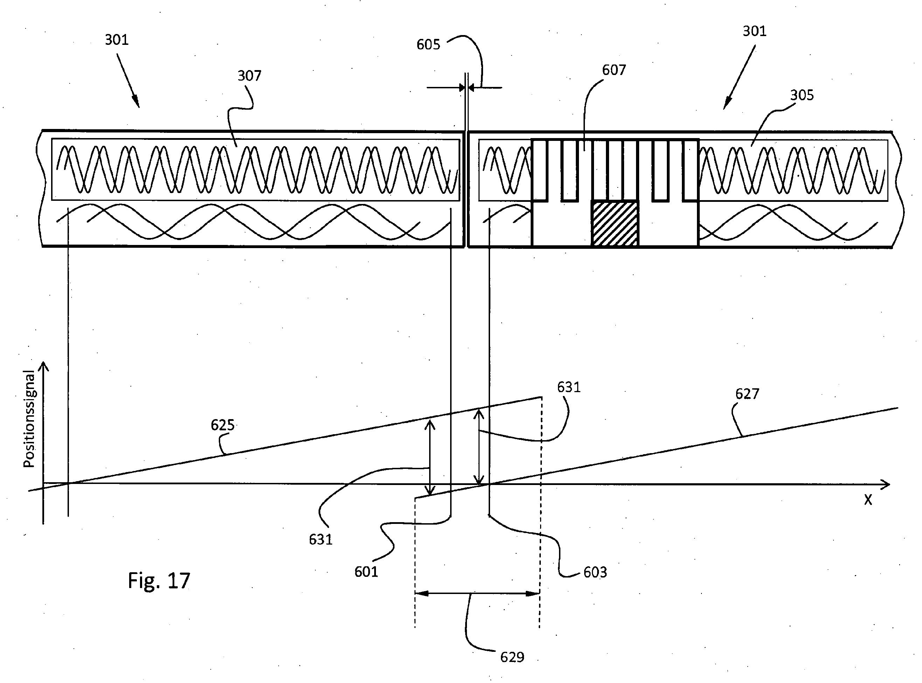

Fig. 17 zeigt eine Verlagerung des Bauteils 607 bereits über den Abstand 605 zwischen zwei Positionserfassungsvorrichtungen 301 sowie einen Verlauf der entsprechenden Positionssignale des Erfassungsmoduls 307 der Positionserfassungsvorrichtung 301 sowie des Erfassungsmoduls 305 der weiteren Positionserfassungsvorrichtung 301. Die Gerade mit dem Bezugszeichen 625 zeigt den Verlauf des Positionssignals, welches von der linken Positionserfassungsvorrichtung ausgegeben wurde. Die Gerade mit dem Bezugszeichen 627 zeigt den Verlauf des Positionssignals, welches aus dem Erfassungsmodul 305 der rechten Positionserfassungsvorrichtung ausgegeben wurde.

Wenn der Abstand zwischen den beiden Positionserfassungsvorrichtungen 301, also der Abstand 605, gleich dem vorbestimmten Abstand 309 zwischen zwei Erfassungsmodulen 305 und 307 einer Positionserfassungsvorrichtung 301 ist, so sind die entsprechenden Kurven 625, 627 bei den entsprechenden Überfahrten zwischen den entsprechenden Abständen gleich. Wenn aber der Abstand 605 von dem Abstand 309 abweicht, so ergeben sich hier Unterschiede im entsprechenden Kurvenverlauf bzw. dem entsprechenden Positionssignalverlauf.

Da aber der vorbestimmte Abstand 309 als Referenzabstand ausgemessen wurde, kann die Änderung bzw. Abweichung des Abstands 605 rechnerisch kompensiert werden. Insbesondere ist es in vorteilhafter Weise ermöglicht, den Abstand 605 als Absolutabstand zu bestimmen.

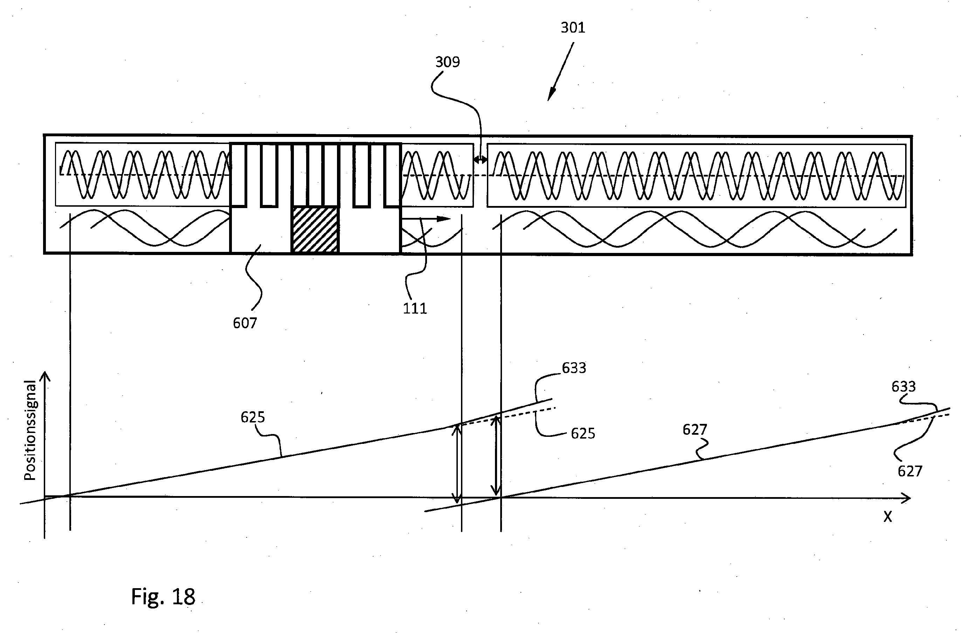

Fig. 18 zeigt eine Verlagerung des Bauteils 607 entlang einer Positionserfassungsvorrichtung 301 und analog zu den Fig. 16 bis 17 entsprechend graphische Verläufe der Positionssignale. Hierbei ist aber das Bauteil 607 relativ zu der Verlagerung 111, also relativ zu der Fahrtrichtung, verkippt. Diese Verkippung ist allerdings der Übersicht halber nicht explizit eingezeichnet.

Aufgrund der Verkippung ergeben sich von der Idealform, also den Kurvenverläufen gemäß Fig. 16, unterschiedliche Kurvenverläufe 625, 627, wobei der Kurvenbereich, der von der Idealform abweicht, mit dem Bezugszeichen 633 gekennzeichnet ist. Die Idealform bzw. Idealverlauf der Position des Beginns der Abweichung ist gestrichelt bzw. mit einer durchzogenen Linie 625 respektive 627 dargestellt. Auch diese Differenz von der Idealform kann erkannt und entsprechend rechnerisch kompensiert werden. Das heißt also, dass sobald einmal ein vorbestimmter Abstand als Referenz ausgemessen wurde, im weiteren Betrieb bei einer eventuellen Verkippung des Bauteils 607 diese Verkippung erkannt und berücksichtigt werden kann.

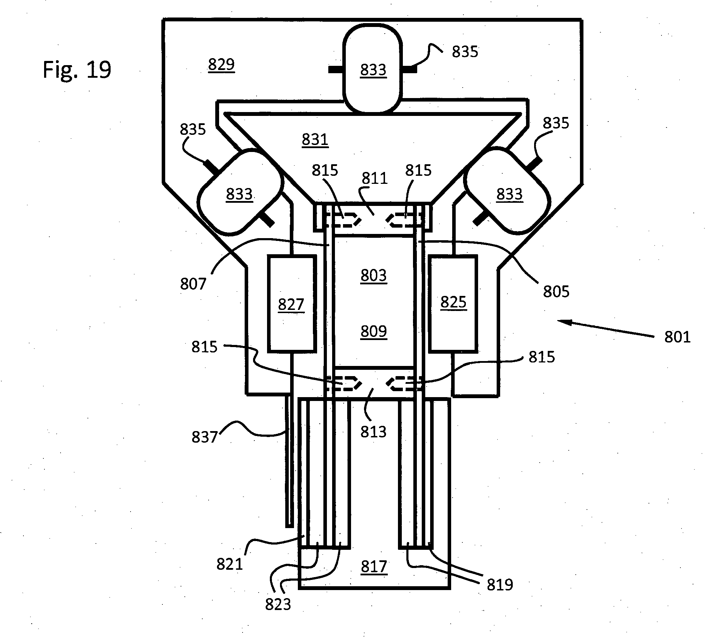

Fig. 19 zeigt ein lineares Transportsystem 801 in einer frontalen Querschnittsansicht.

Das lineare Transportsystem 801 umfasst eine Statorvorrichtung 803. Die Statorvorrichtung 803 umfasst eine erste Leiterplatte 805 und eine zweite Leiterplatte 807 als erste respektive zweite Halteeinrichtung eines Haltemoduls, welche parallel zueinander und gegenüberliegend angeordnet sind.

Ein Bereich zwischen den beiden Leiterplatten 805 und 807 der Statorvorrichtung 803 ist mit dem Bezugszeichen 809 gekennzeichnet und kann als ein Spulenbereich bezeichnet werden, insofern in diesem Bereich mehrere Spulen angeordnet sind. Hierbei sind diese Spulen um Statorzähne gewickelt, welche in entsprechende Aussparungen der beiden Leiterplatten 805 und 807 gesteckt sind.

Oberhalb des Spulenbereichs 809 ist ein Profilelement 811 als Aufnahmeeinrichtung gebildet. Unterhalb des Spulenbereichs 809 ist ebenfalls ein Profilelement 813 gebildet, welches parallel zu dem Profilelement 811 verläuft. Die beiden Profilelemente 811 und 813 weisen eine Längsausdehnung analog zu den beiden Leiterplatten 805 und 807 auf, so dass mittels Schrauben 815 die beiden Leiterplatten 805 und 807 an die beiden Profilelemente 811 und 813 geschraubt werden können. Hierfür weisen die beiden Leiterplatten 805 und 807 entsprechende hier nicht gezeigte Löcher auf. Beide Profilelemente 811 und 813 stützen in vorteilhafter Weise die beiden Leiterplatten 805 und 807 und bewirken in vorteilhafter Weise insbesondere eine mechanische Stabilisierung der Statorvorrichtung 803. Beide Profilelemente 811 und 813 können insofern vorzugsweise auch als Stützprofilelemente bezeichnet werden. Beide Profilelemente 811 und 813 sind insbesondere in einem ausreichenden nahen Abstand für eine thermische Kopplung zwischen den Spulen und den Profilelementen 811 und 813 angeordnet, so dass in vorteilhafter Weise thermische Energie, welche im Betrieb der Spulen, also insbesondere bei Bestromung, gebildet wird, abgeführt werden kann, so dass eine Überhitzung der Spulen wirksam vermieden werden kann. Beide Profilelemente 811 und 813 können insofern auch vorzugsweise als ein thermischer Energieabführer zum Abführen von thermischer Energie bezeichnet werden.

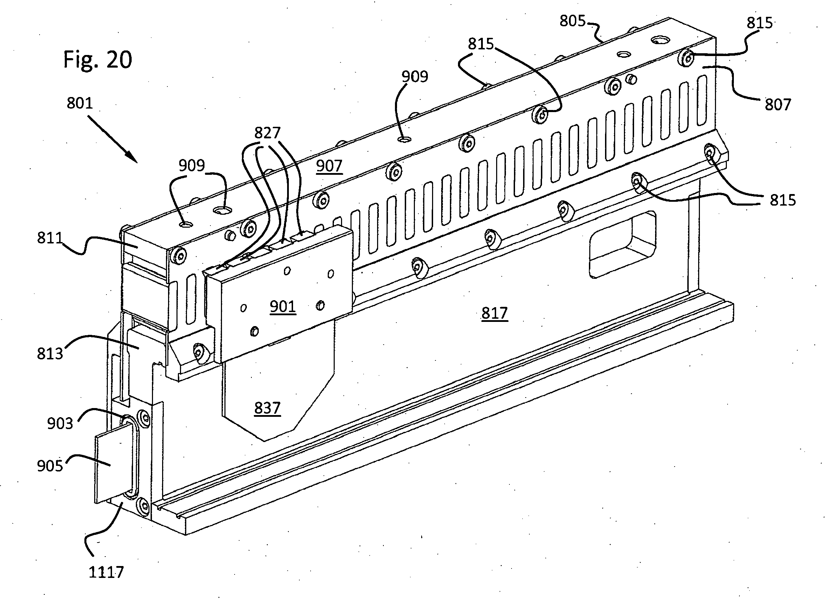

Unterhalb des Profilelements 813 ist ein Trägerprofilelement 817 als ein Trägermodul gebildet, auf welchem das Profilelement 813 angeordnet beziehungsweise befestigt ist. Das heißt also insbesondere, dass das Trägerprofilelement 817 die Statorvorrichtung 803 trägt. In einer beispielsweise in Fig. 20 gezeigten Ausführungsform sind das Profilelement 813 und das Trägerprofilelement 817 als Abwandlung des linearen Transportsystems 801 gemäß Fig. 19 als ein gemeinsames Profilelement gebildet und bilden somit das Trägermodul. Das Trägerprofilelement 817 kann insbesondere einen Hohlraum, auch Einbauraum genannt, aufweisen, in welchem die beiden Leiterplatten 805 und 807 hineinragen, wobei in diesem Hohlraum beziehungsweise Einbauraum elektronische Komponenten wie zum Beispiel eine Leistungselektronik 819 und/oder ein Träger 821 einer Positionserfassungsvorrichtung angeordnet sein können. Der Träger 821 kann vorzugsweise analog zu den Trägern 303 gemäß Fig. 3 und Fig. 14 gebildet sein.

Das lineare Transportsystem 801 umfasst ferner zwei Dauermagnete, welche auch als Permanentmagnete 825 und 827 bezeichnet werden können. Die beiden Permanentmagnete 825 und 827 sind jeweils benachbart zu dem Spulenbereich 809 angeordnet. Das heißt also insbesondere, dass sich der Permanentmagnet 825 rechts von der Leiterplatte 805 befindet. Der Permanentmagnet 827 befindet sich links neben der Leiterplatte 807. Hierbei sind die beiden Permanentmagnete 825 und 827 beabstandet zu den entsprechenden Leiterplatten 805 und 807 angeordnet. Es ist insofern jeweils ein Spalt zwischen den Permanentmagneten 825 und 827 und den Leiterplatten 805 und 807 gebildet. Eine solche Anordnung gemäß Fig. 8 kann daher auch als eine Doppelspaltanordnung bezeichnet werden.

In einer nicht gezeigten Ausführungsform können auch mehrere Permanentmagnete 825 und 827 vorgesehen sein, welche jeweils links und rechts der entsprechenden Leiterplatten 805 und 807 angeordnet sind.

Die Permanentmagnete 825 und 827 sind jeweils von einer hier nicht im Detail dargestellten Halterung gehalten, wobei an den beiden Halterungen ein Fahrzeug 829 befestigt ist. Ferner ist auf dem Profilelement 811, also der Aufnahmeeinrichtung, welches sich oberhalb des Spulenbereichs 809 befindet, eine Führung 831 für das Fahrzeug 829 angeordnet.

Die Führung 831 weist eine Trapezform auf, wobei an drei Seiten des Trapezes jeweils eine Laufrolle 833 mit entsprechender Laufachse 835 anliegt. Die Laufrollen 833 sind an dem Fahrzeug 829 angeordnet, so dass hierüber eine rollende Bewegung des Fahrzeugs 829 entlang der Führung 831 ermöglicht ist. Die Ausführung der Laufrollen 833 in Lage, Anordnung, Geometrie und Anzahl kann ohne Einschränkung auch in anderen hier nicht gezeigten Ausführungsformen in beliebiger Variation erfolgen.

In einer nicht gezeigten Ausführungsform kann zusätzlich oder anstelle vorgesehen sein, dass das Fahrzeug magnetgelagert und/oder fluidgelagert, insbesondere gasgelagert, vorzugsweise luftgelagert, entlang der Führung 831 geführt wird.

An der Halterung, welche den Permanentmagneten 827 hält, ist ein Bauteil 837 mit elektrisch leitenden Bereichen angeordnet. Das Bauteil 837 kann vorzugsweise analog zu den Bauteilen 401, 607, 611 gemäß Fig. 4, Fig. 12 und Fig. 13 gebildet sein. Das Bauteil 837 verläuft verlängernd nach unten weg von dem Fahrzeug 829 in Richtung des Trägerprofilelements 817 und ist so gegenüber dem Träger 821 angeordnet. Aus den gemessenen Positionssignalen kann vorzugsweise an anderer Stelle, zum Beispiel mittels einer übergeordneten Steuerung, eine Position berechnet werden. Das Bezugszeichen 823 kennzeichnet weitere Elektroniken, welche in dem Einbauraum angeordnet sind, und beispielsweise für eine elektrische Kontaktierung der Erfassungsmodule des Trägers 821 verwendet werden können.

Fig. 20 zeigt eine schräge Draufsicht auf die Abwandlung des linearen Transportsystems 801 gemäß Fig. 19, wobei hier entsprechend den vorherigen Ausführungen das Fahrzeug 829 und die Führung 831 der Übersicht halber nicht gezeigt sind.

Die Fig. 20 zeigt die Halterung 901, welcher mehrere Permanentmagnete 827 hält. Detaillierter gezeigt ist auch das Bauteil 837.

Fig. 20 zeigt ferner die Möglichkeit, dass das Trägermodul als gemeinsames Profilelement aus dem Profilelement 813 und dem Trägerprofilelement 817 gebildet ist. Ein Deckelelement 1117 weist eine Öffnung 903 auf, in welche eine Kontaktierungsleiterplatte 905 geschoben werden kann. Mittels dieser Kontaktierungsleiterplatte 905 ist eine elektrische Kontaktierung der Leiterplatten 805 und/oder 807 ermöglicht.

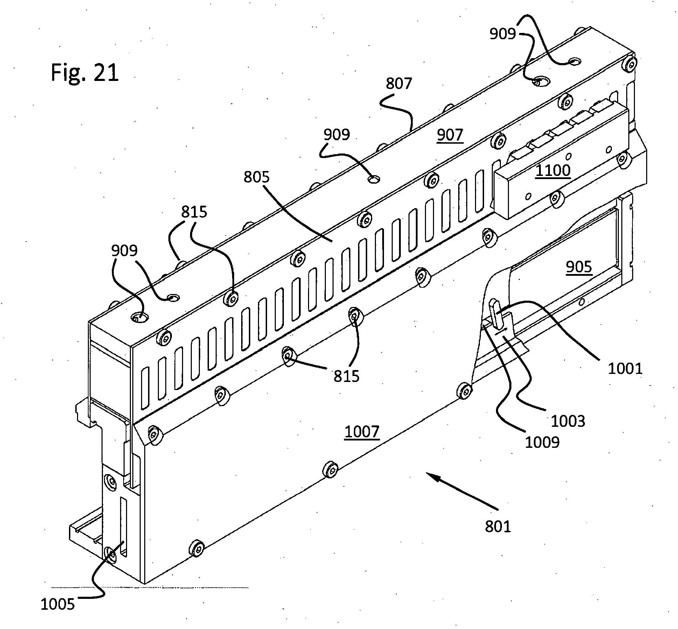

Fig. 21 zeigt eine schräge Draufsicht entsprechend einer Rückansicht bezogen auf die Ansicht gemäß Fig. 20 des linearen Transportsystems 801. An einem dem Längsende mit der Öffnung 903 gegenüberliegenden Längsende ist eine weitere Öffnung 1005 vorgesehen, in welche eine weitere nicht gezeigte Kontaktierungsleiterplatte eines vorangestellten hier nicht gezeigten weiteren linearen Transportsystems eingeschoben werden kann. Somit ist in vorteilhafter Weise eine elektrische Verbindung zu einem weiteren linearen Transportsystem ermöglicht, welches analog zu dem linearen Transportsystem 801 gebildet sein kann. Es kann somit in vorteilhafter Weise ein modulares System gebildet werden, wobei die einzelnen Module aus den linearen Transportsystemen 801 gebildet sein können. Hierbei kann vorzugsweise vorgesehen sein, dass die Führung 831 über mehrere solcher Transportsysteme 801 angeordnet ist, so dass Stoßstellen zwischen den einzelnen Transportsystemen 801 entfallen, was eine Laufruhe eines Fahrzeugs positiv beeinflusst.

Die Öffnung 903 und die weitere Öffnung 1005 sind mittels eines Durchgangs miteinander verbunden, so dass durch das Trägerprofilelement 817 ein Tunnel verläuft. Da in einen solchen Tunnel eine elektronische Komponente wie hier beispielsweise die Kontaktierungsleiterplatte 905 eingeschoben werden kann, kann ein solcher Tunnel auch als ein Einbauraum für eine elektronische Komponente bezeichnet werden. In einer nicht gezeigten Ausführungsform kann vorgesehen sein, dass in dem Tunnel eine Schiene für eine Führung der Kontaktierungsleiterplatte 905 gebildet ist.

Fig. 21 zeigt des Weiteren ein Verschiebemittel 1001, welches mit der Kontaktierungsleiterplatte 905 derart zusammenwirkt, dass dadurch eine Längsverschiebung der Kontaktierungsleiterplatte 905 bewirkt ist. Diese Verschiebung ist hier mittels eines Doppelpfeils mit dem Bezugszeichen 1003 symbolisch gekennzeichnet. Um das Verschiebemittel 1001 sehen zu können, ist in dem entsprechenden Bereich eine lösbar befestigte Abdeckplatte 1007 der Übersicht halber symbolisch aufgeschnitten gezeichnet.

Ferner ist mittels des Bezugszeichens 1009 ein Schlitz gekennzeichnet, welcher in einer Tunnelwand gebildet ist, wobei das Verschiebemittel 1001 in dem Schlitz 1009 aufgenommen ist, so dass das Verschiebemittel 1001 in dem Schlitz 1009 hin und her gleiten kann.

Eine solche Kontaktierungsleiterplatte weist insbesondere folgende Wirkung bzw. Funktion auf. Zwei lineare Transportsysteme können so in Längsrichtung nebeneinander an einem Halteprofil bzw. Trägerplatte befestigt werden, wobei durch das Verschieben der Platine bzw. Kontaktierungsleiterplatte 905 von einem System in das nächste System automatisch das nebenliegende System kontaktiert wird. Das heißt also insbesondere, dass mittels einer Platine 905 zwei lineare Transportsysteme kontaktiert werden können. Hinter der Öffnung 1005 befindet sich beispielsweise ein aus mehreren Federkontakten bestehender Stecker, so dass die eingeschobene Platine 905 in der Position gehalten und kontaktiert wird. Dies bietet insbesondere den Vorteil, dass die einzelnen Module bzw. Transportsysteme im Servicefall zur Seite hin entnommen werden können, ohne die Module auseinanderschieben zu müssen. Weiterhin benötigt das Gesamtsystem umfassend die beiden oder auch noch weitere lineare Transportsysteme dann auch nur eine Anschlussleitung zur Spannungsversorgung und/oder zur Verbindung mit einer übergeordneten Steuerung.

Fig. 20 und 21 zeigen ferner eine Oberfläche 907 des Profilelements 811, wobei die Oberfläche 907 mehrere Aussparungen 909 aufweist, in welchen Schrauben und/oder Nieten und/oder Passstifte gesteckt beziehungsweise geschraubt werden können, um die Führung 831 an dem Profilelement 811, also der Aufnahmeeinrichtung, zu befestigen.

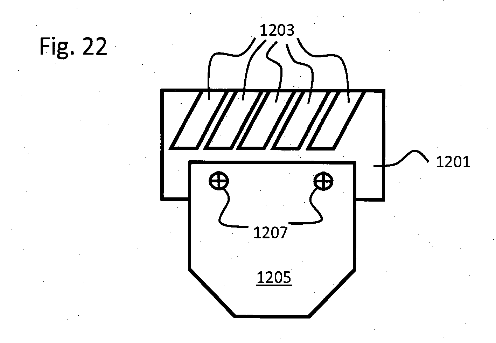

Fig. 22 zeigt eine Halterung 1201 umfassend mehrere trapezförmige Permanentmagnete 1203. Die Halterung 1201 kann vorzugsweise auch als eine Magnethalterung bezeichnet werden.

Unterhalb der Permanentmagnete 1203 ist ein Bauteil 1205 mit hier nicht dargestellten elektrisch leitenden Bereichen angeordnet, welches mittels Schrauben 1207 an der Halterung 1201 verschraubt ist. Vorzugsweise ist das Bauteil 1205 analog zu den Bauteilen 401, 607, 611 gemäß Fig. 4, Fig. 12 und Fig. 13 gebildet.

Eine solche Halterung 1201 kann insbesondere in dem linearen Transportsystem 801 verwendet werden.

Ein Fahrzeug kann dann vorzugsweise an der Halterung 1201 befestigt werden.

Die Trapezform der Permanentmagnete 1203 bewirkt in vorteilhafter Weise kleinere Kraftrippel im Vergleich zu Permanentmagnete in Rechteckform, was weiterhin in vorteilhafter Weise zu einer gleichmäßigeren Bewegung beziehungsweise Verlagerung der Halterung 1201 führt.

In Fig. 21 ist mit dem Bezugszeichen 1100 eine alternative Ausführungsform der Halterung dargestellt, welche analog zur Halterung 1201 gemäß Fig. 22 gebildet ist, aber ohne das Bauteil 1205.

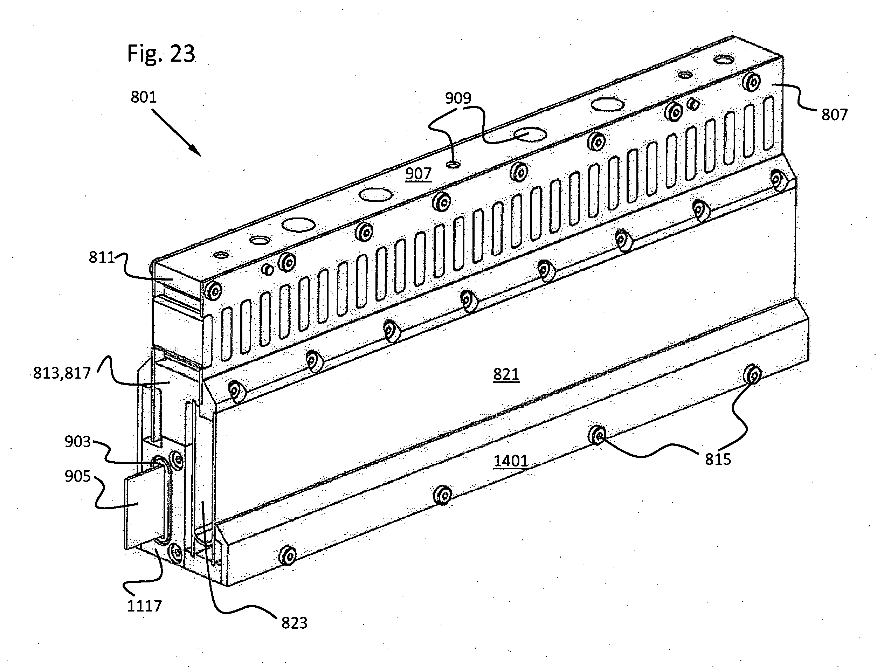

Fig. 23 zeigt eine schräge Draufsicht auf das lineare Transportsystem 801 gemäß den Fig. 19 bis 21, wobei hier zur vereinfachten Darstellung weder das Fahrzeug 829, noch die Führung 831 und auch nicht die Halterung 901 gezeigt sind.

Das lineare Transportsystem gemäß Fig. 23 entspricht im Wesentlichen dem in Fig. 20 gezeigten linearen Transportsystems, so dass die zu Fig. 20 gemachten Erläuterungen analog auch für Fig. 23 gelten.

Im Gegensatz zur Darstellung in Fig. 20 ist in Fig. 23 der Träger 821 dargestellt, welche von einem Halteelement 1401 an dem Trägerprofilelement 817 mittels Schrauben 815 lösbar fixiert ist.

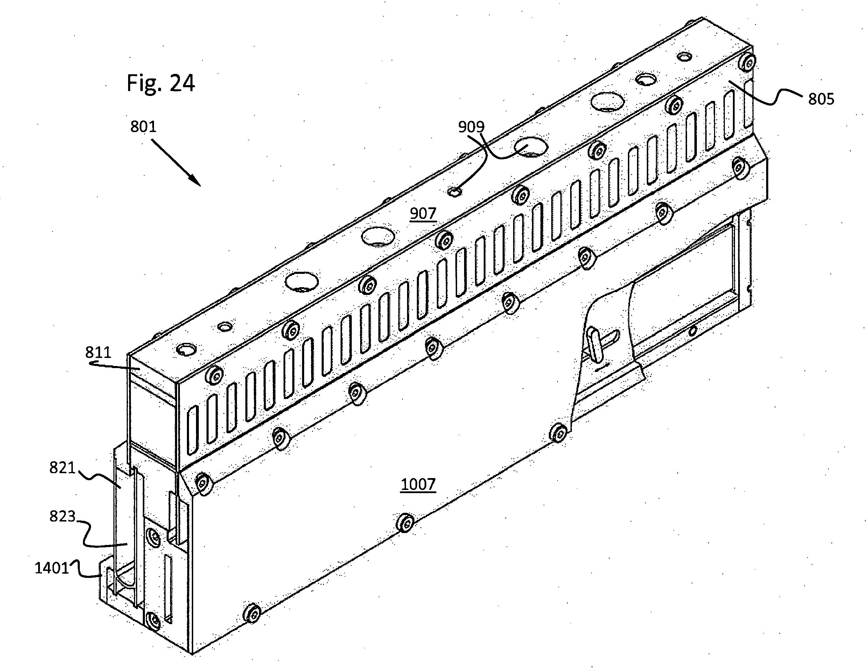

Fig. 24 zeigt eine schräge Draufsicht entsprechend einer Rückansicht bezogen auf die Ansicht gemäß Fig. 23 des linearen Transportsystems 801. Die zu den Fig. 20, 21 und 23 gemachten Erläuterungen zu dem linearen Transportsystem 801 gelten in analoger Weise auch für Fig. 24, so dass zur Vermeidung von Wiederholungen auf die zuvor gemachten Erläuterungen verwiesen wird.

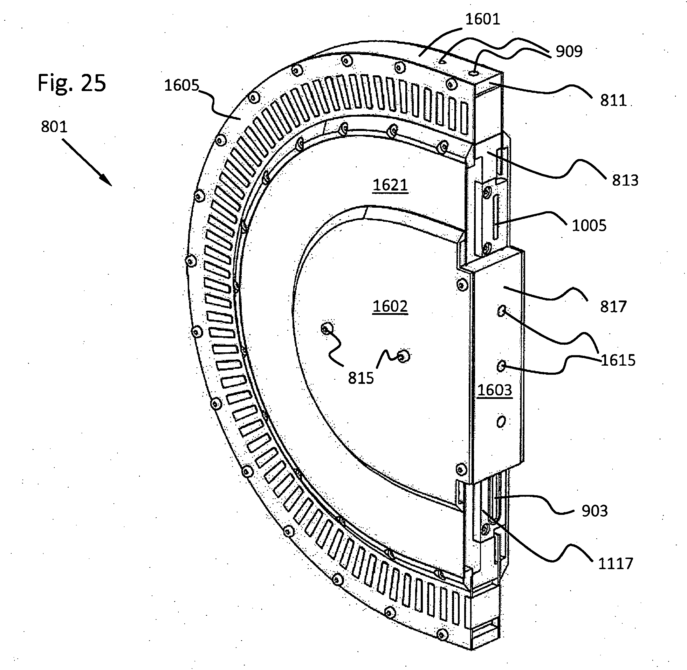

Fig. 25 zeigt ein bogenförmig ausgebildetes lineares Transportsystem 801 gemäß den Fig. 19 bis 21 und 23 bis 24 in einer schrägen Draufsicht, wobei hier ebenfalls zur vereinfachten Darstellung weder das Fahrzeug 829, noch die Führung 831 und auch nicht die Halterung 901 gezeigt sind.

Die Leiterplatte 1605 entspricht in ihrem Funktionsumfang der Leiterplatte 805 in Fig. 19, wobei sie eine Bogenform aufweist.

Die Oberfläche 1601 des bogenförmig ausgebildeten Profilelements 811 weist ebenfalls mehrere Aussparungen 909 auf, in welche Schrauben und/oder Nieten und/oder Passstifte gesteckt beziehungsweise geschraubt werden können, um die Führung 831 an dem Profilelement 811, also der Aufnahmeeinrichtung, zu befestigen.

Weiterhin weist das lineare Transportsystem 801 gemäß Fig. 25 eine Leiterplatte 1621 als Träger der Positionserfassungsvorrichtung auf, deren Aufbau dem zuvor dargestellten und beschriebenen und vorzugsweise als Leiterplatte ausgebildeten Träger 821 entspricht. Die Leiterplatte 1621 wird mittels eines Halteelements 1602 an dem Trägerprofilelement 817 mittels Schrauben 815 lösbar fixiert.

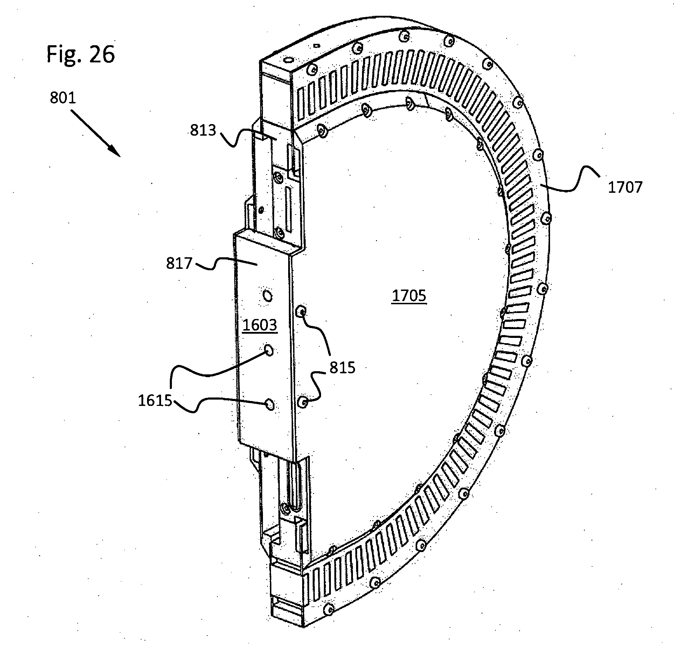

Fig. 26 zeigt eine schräge Draufsicht entsprechend einer Rückansicht bezogen auf die Ansicht gemäß Fig. 25 des linearen Transportsystems 801. Die zu den Fig. 20, 21, 23, 24 und 25 gemachten Erläuterungen zu dem linearen Transportsystem 801 gelten in analoger Weise auch für Fig. 26, so dass zur Vermeidung von Wiederholungen auf die zuvor gemachten Erläuterungen verwiesen wird.

Die Leiterplatte 1707 entspricht in ihrem Funktionsumfang der Leiterplatte 807 in Fig. 19, wobei sie eine Bogenform aufweist. Die lösbar mittels Schrauben 815 fixierte Abdeckplatte 1705 entspricht in ihrem Aufbau und Funktionsweise der in Fig. 21 dargestellten Abdeckplatte 1007.

Das in den Fig. 25 und 26 dargestellte Trägerprofilelement 817 des bogenförmig ausgebildeten linearen Transportsystems 801 weist einen Vorsprung 1603 auf, der Befestigungsbohrungen 1615 enthält, mittels dessen das lineare Transportsystem an einem nicht dargestellten Maschinengestell lösbar fixiert werden kann.

Oberhalb und unterhalb des Vorsprungs 1603 können beispielsweise gerade ausgebildete lineare Transportsysteme 801 entsprechend der Fig. 20, 21, 23 oder 24 an das bogenförmig ausgebildete lineare Transportsystem 801 gemäß der Fig. 25 oder 26 angereiht werden. Die gerade ausgebildeten linearen Transportsysteme 801 werden dazu ebenfalls an dem nicht dargestellten Maschinengestell lösbar fixiert. Anschließend werden die verschiebbaren Platinen 905 von den Öffnungen 903 in die Öffnungen 1005 verschoben, so dass die einzelnen Module des linearen Transportsystems 801 elektrisch miteinander kontaktiert sind. Auf die Oberflächen 907 und 1601 des Profilelementes 811 werden entsprechend ausgebildete Führungen 831 aufgesetzt und in bekannter Weise mittels der Öffnungen 909 fixiert. Dabei kann die Führung 831 auch eine Mehrzahl an einzelnen linearen Transportsystemen 801 überdecken. Auf die Führungen 831 werden dann die entsprechend ausgebildeten Fahrzeuge 829 aufgesetzt und wie weiter oben beschrieben angetrieben.

Sollte bei einem aus einer Mehrzahl von geraden und/oder bogenförmig ausgebildeten linearen Transportsystemen 801 gebildeten Gesamtsystem ein einzelnes lineares Transportsystem 801 ausgetauscht werden müssen, so wäre zunächst die Verbindung mit der Führung 831 zu lösen. Anschließend würde die verschiebbare Platine 905 zurück in das benachbarte lineare Transportsystem 801 verschoben und die in dem auszutauschenden linearen Transportsystem 801 befindliche verschiebbare Platine 905 würde aus dem anderen benachbarten linearen Transportsystem 801 zurückgezogen. Als letzter Demontageschritt wäre die Fixierung an dem Maschinengestell zu lösen und das auszutauschende lineare Transportsystem 801 ist entnehmbar. Ein neues lineares Transportsystem 801 ist dann in umgekehrter Reihenfolge in das Gesamtsystem integrierbar. Ein Vorteil eines derartigen modularen Aufbaus ist insbesondere darin zu sehen, dass ausschließlich das auszutauschenden lineare Transportsystem von der Führung 831 und dem Maschinengestell gelöst werden muss und die im Gesamtsystem verbleibenden linearen Transportsysteme 801 nicht bearbeitet werden müssen. Dies bringt im Servicefall einen erheblich Zeit- und somit auch Kostenvorteil gegenüber aus dem Stand der Technik bekannten Transportsystemen.

## Patentansprüche

1. Positionserfassungsvorrichtung (101) zum Erfassen einer Position eines beweglichen Elements (109, 401, 607, 611) einer Antriebsvorrichtung, umfassend:
- zwei Träger (103, 303), welche nebeneinander entlang einer Fahrstrecke des beweglichen Elements (109, 401, 607, 611) angeordnet sind, wobei zwischen dem ersten und zweiten Träger (103, 303) ein Abstand (605) gebildet ist,
- wobei die Träger (103, 303) jeweils zwei in einem vorbestimmten Abstand (113) nebeneinander und überlappungsfrei angeordnete Erfassungsmodule (105, 107; 305, 307) zum Erfassen einer Position des beweglichen Elements (109, 401, 607, 611) aufweisen,
- wobei die Erfassungsmodule jeweils eine Erregerspule (311, 313) und eine der Erregerspule (311, 313) zugeordnete Empfangsspule (315a, 315b) mit einer eine Periode aufweisenden Geometrie umfassen, wobei ein Erregerimpuls der Erregerspule (311, 313) eine elektrische Spannung in der Empfangsspule (315a, 315b) induziert,
- wobei die Erfassungsmodule (105, 107) ausgebildet sind, eine Änderung der in der Empfangsspule (315a, 315b) induzierten elektrischen Spannung durch das bewegliche Element (109, 401, 607, 611) zu erfassen und bei einer Erfassung des beweglichen Elements (109, 401, 607, 611) ein Positionssignal auszugeben,
- wobei das bewegliche Element (109, 401, 607, 611) eine Länge aufweist, welche größer ist als der vorbestimmte Abstand (309) zwischen den zwei Erfassungsmodulen (105, 107; 305, 307) des Trägers, so dass bei einer Überlagerung des vorbestimmten Abstandes (309) durch das bewegliche Element sowohl ein Positionssignal vom ersten Erfassungsmodul (305) als auch vom zweiten Erfassungsmodul (307) des Trägers (103, 303) ausgeben wird, um den vorbestimmten Abstand (113) basierend auf den Positionssignalen als Referenzabstand auszumessen,
- so dass bei einer Verlagerung des beweglichen Elements (109, 401, 607, 611) entlang der beiden Träger (103, 303) über den Abstand (605) ein Absolutwert des Abstands basierend auf dem Referenzabstand bestimmbar ist.

2. Positionserfassungsvorrichtung (101) nach Anspruch 1, wobei die Erfassungsmodule (105, 107) jeweils mehrere nebeneinander angeordnete Empfangsspulen (315a, 315b) aufweisen.

3. Positionserfassungsvorrichtung (101) nach Anspruch 1 oder 2, wobei die Spulen eine sinusförmige Geometrie aufweisen und eine Anzahl an Sinuswellen mindestens 1 beträgt.

4. Positionserfassungsvorrichtung (101) nach einem der Ansprüche 1 bis 3, wobei eine Breite der Erregerspule (311, 313) mindestens 2,5 Perioden beträgt.

5. Positionserfassungsvorrichtung (101) nach einem der Ansprüche 1 bis 4, wobei das bewegliche Element (109, 401, 607, 611) elektrisch leitende Bereiche (403, 405, 407, 409, 411, 413) umfasst, welche jeweils eine Breite von einer halben Periode aufweisen, und ein jeweiliger Abstand zwischen zwei Bereichen eine halbe Periode beträgt.

6. Positionserfassungsvorrichtung (101) nach einem der vorstehenden Ansprüche, wobei die Träger (103, 303) jeweils einen benachbart zu den Erfassungsmodulen (105, 107) gebildeten und entlang des ersten Erfassungsmoduls (105) über den vorbestimmten Abstand (113) zum zweiten Erfässungsmodul (107) verlaufenden Erfassungsbereich (615) aufweist, in welchem ein weiteres Erfassungsmodul (617a, 617b) zum Erfassen einer Position des beweglichen Elements (109, 401, 607, 611) angeordnet ist, welches ausgebildet ist, bei Erfassung des beweglichen Elements (109, 401, 607, 611) ein Positionssignal auszugeben.

7. Positionserfassungsvorrichtung (101) nach Anspruch 6, wobei das bewegliche Element (109, 401, 607, 611) einen weiteren elektrisch leitender Bereich (609, 613) umfasst, welcher unterhalb der elektrischen leitenden Bereiche (403, 405, 407, 409, 411, 413) dem Erfassungsbereich (615) gegenüberliegend angeordnet ist.

8. Antriebssystem mit einem ersten und einem zweiten linearen Transportsystem, das jeweils ein Trägerprofilelement (817) aufweist, und einer Positionserfassungsvorrichtung (101) nach einem der vorstehenden Ansprüche, wobei in einem Einbauraum des Trägerprofilelements des ersten linearen Transportsystems der ersten Träger der Positionserfassungsvorrichtung (101) und in einem Einbauraum des Trägerprofilelements des zweiten linearen Transportsystems der zweite Träger der Positionserfassungsvorrichtung (101) angeordnet ist.

9. Antriebssystem nach Anspruch 8, wobei das lineare Transportsystem eine Führung (831) zum Führen des beweglichen Elements aufweist.

10. Verfahren zum Erfassen einer Position eines beweglichen Elements (109, 401, 607, 611) einer Antriebsvorrichtung mittels einer Positionserfassungsvorrichtung (101) nach einem der vorherigen Ansprüche, umfassend die folgenden Schritte:
- Verlagern (201) des beweglichen Elements entlang der zwei Erfassungsmodule (105, 107) über den vorbestimmten Abstand (113),
- Messen (203) von jeweiligen Positionssignalen der zwei Erfassungsmodule (105, 107) während der Verlagerung,
- basierend auf den Positionssignalen Ausmessen (205) des vorbestimmten Abstands als Referenzabstand,
- Verlagern des beweglichen Elements (109, 401, 607, 611) entlang der zwei Träger (103, 303) über den Abstand (605) und
- basierend auf dem Referenzabstand Bestimmen eines Absolutwerts des Abstands zwischen den zwei Trägern (103, 303).

11. Verfahren nach Anspruch 10, wobei die Erregerspule (311, 313) mit dem Erregerimpuls beaufschlagt wird, so dass in der Empfangsspule (315a, 315b) die elektrische Spannung induziert wird, wobei das Messen der Positionssignale ein direktes Abtasten und unmittelbares Digitalisieren der induzierten Spulenspannung umfasst.

12. Verfahren nach Anspruch 10 oder 11, wobei basierend auf den Positionssignalen eine Orientierung des beweglichen Elements (109, 401, 607, 611) relativ zu einer Verlagerungsrichtung bestimmt wird.

13. Computerprogramm, umfassend Programmcode zur Ausführung des Verfahrens nach einem der Ansprüche 10 bis 12, wenn das Computerprogramm auf einem Computer ausgeführt wird.

## Claims

1. Position detection device (101) for detecting a position of a moveable elements (109, 401, 607, 611) of a drive device, comprising:
- two supports (103, 303) which are arranged next to one another along a travel distance of the moveable element (109, 401, 607, 611), a distance (605) being formed between the first and second supports (103, 303),
- in which the supports (103, 303) each have two detection modules (105, 107; 305, 307), arranged at a predetermined distance (113) next to one another and without overlap, for detecting a position of the moveable element (109, 401, 607, 611),
- in which the detection modules each comprise an excitation coil (311, 313) and a receiving coil (315a, 315b), assigned to the excitation coil (311, 313), with a geometry having a period, an excitation pulse of the excitation coil (311, 313) inducing an electrical voltage in the receiving coil (315a, 315b),
- in which the detection modules (105, 107) are designed to detect a change in the electrical voltage induced in the receiving coil (315a, 315b) owing to the moveable element (109, 401, 607, 611), and to output a position signal upon detection of the moveable element (109, 401, 607, 611), and
- in which the moveable element (109, 401, 607, 611) has a length which is greater than the predetermined distance (309) between the two detection modules (105, 107; 305, 307) of the support so that upon superimposition of the moveable element on the predetermined distance (309), a position signal is output both by the first detection module (305) and by the second detection module (307) of the support (103, 303) in order to measure the predetermined distance (113) based on the position signals as reference distance,
- so that on displacement of the moveable element (109, 401, 607, 611) along the two supports (103, 303) over the distance (605), an absolute value of the distance can be determined on the basis of the reference distance.

2. Position detection device (101) according to Claim 1, in which the detection modules (105, 107) each have a plurality of receiving coils (315a, 315b) arranged next to one another.

3. Position detection device (101) according to Claim 1 or 2, in which the coils have a sinusoidal geometry, and a number of sine waves is at least 1.

4. Position detection device (101) according to one of Claims 1 to 3, in which a width of the excitation coil (311, 313) is at least 2.5 periods.

5. Position detection device (101) according to one of Claims 1 to 4, in which the moveable element (109, 401, 607, 611) comprises the electrically conducting regions (403, 405, 407, 409, 411, 413) which each have a width of a half period, and a respective distance between two regions is a half period.

6. Position detection device (101) according to one of the preceding claims, in which the supports (103, 303) each have a detection region (615) which is formed adjacent to the detection modules (105, 107) and runs along the first detection module (105) over the predetermined distance (113) to the second detection module (107) and in which a further detection module (617a, 617b) for detecting a position of the moveable element (109, 401, 607, 611) is arranged which is designed to output a position signal on detection of the moveable element (109, 401, 607, 611).

7. Position detection device (101) according to Claim 6, in which the moveable element (109, 401, 607, 611) comprises a further electrically conducting region (609, 613) which is arranged below the electrically conducting regions (403, 405, 407, 409, 411, 413) opposite the detection region (615).

8. Drive system comprising a first and a second linear transport system which respectively has a support profile element (817) and a position detection device (101) according to one of the preceding claims, in which the first support of the position detection device (101) is arranged in an installation space of the support profile element of the first linear transport system, and the second support of the position detection device (101) is arranged in an installation space of the support profile element of the second linear transport system.

9. Drive system according to Claim 8, in which the linear transport system has a guide (831) for guiding the moveable element.

10. Method for detecting a position of a moveable element (109, 401, 607, 611) of a drive device by means of a position detection device (101) according to one of the preceding claims, comprising the following steps:
- displacing (201) the moveable element along the two detection modules (105, 107) over the predetermined distance (113),
- measuring (203) respective position signals of the two detection modules (105, 107) during the displacement,
- measuring (205) the predetermined distance as reference distance on the basis of the position signals,
- displacing the moveable element (109, 401, 607, 611) along the two supports (103, 303) over the distance (605), and
- determining an absolute value of the distance between the two supports (103, 303) on the basis of the reference distance.

11. Method according to Claim 10, in which the excitation pulse is applied to the excitation coil (311, 313) so that the electrical voltage is induced in the receiving coil (315a, 315b), the measuring of the position signals comprising direct sampling and indirect digitizing of the induced coil voltage.

12. Method according to Claim 10 or 11, in which an orientation of the moveable element (109, 401, 607, 611) relative to a direction of displacement is determined on the basis of the position signals.

13. Computer program comprising program code for executing the method according to one of Claims 10 to 12 when the computer program is executed on a computer.

## Revendications

1. Dispositif de détection de position (101) destiné à détecter une position d'un élément mobile (109, 401, 607, 611) d'un dispositif d'entraînement, comprenant :
- deux supports (103, 303) qui sont disposés côte à côte le long d'un trajet de déplacement des éléments mobiles (109, 401, 607, 611), dans lequel une distance (605) est créée entre les premier et deuxième supports (103, 303),
- dans lequel les supports (103, 303) comportent respectivement deux modules de détection (105, 107 ; 305, 307) disposés à une distance prédéterminée (113) l'un à côté de l'autre et sans se chevaucher afin de détecter une position de l'élément mobile (109, 401, 607, 611),
- dans lequel les modules de détection comprennent respectivement une bobine d'excitation (311, 313) et une bobine de réception (315a, 315b) associée à l'une des bobines d'excitation (311, 313) et ayant une géométrie présentant une certaine période, dans lequel une impulsion d'excitation de la bobine d'excitation (311, 313) induit une tension électrique dans la bobine de réception (315a, 315b),
- dans lequel les modules de détection (105, 107) sont conçus pour détecter une modification de la tension électrique induite dans les bobines de réception (315a, 315b) par l'élément mobile (109, 401, 607, 611) et pour délivrer un signal de position lors d'une détection de l'élément mobile (109, 401, 607, 611),
- dans lequel l'élément mobile (109, 401, 607, 611) présente une longueur qui est supérieure à la distance prédéterminée (309) entre les deux modules de détection (105, 107 ; 305, 307) du support de manière à ce que lorsque l'élément mobile est superposé à la distance prédéterminée (309), un signal de position soit délivré par le premier module de détection (305) ainsi que par le deuxième module de détection (307) du support (103, 303) afin de mesurer la distance prédéterminée (113) sur la base des signaux de position en tant que distance de référence,
- de manière à ce que, lors d'un déplacement de l'élément mobile (109, 401, 607, 611) le long des deux supports (103, 303) sur ladite distance (605), une valeur absolue de la distance puisse être déterminée sur la base de la distance de référence.

2. Dispositif de détection de position (101) selon la revendication 1, dans lequel les modules de détection (105, 107) comportent respectivement de multiples bobines de réception (315a, 315b) disposées côte à côte.

3. Dispositif de détection de position (101) selon la revendication 1 ou 2, dans lequel les bobines présentent une géométrie sinusoïdale et le nombre d'ondes sinusoïdales est d'au moins 1.

4. Dispositif de détection de position (101) selon l'une quelconque des revendications 1 à 3, dans lequel une largeur de la bobine d'excitation (311, 313) est égale à au moins 2,5 périodes.

5. Dispositif de détection de position (101) selon l'une quelconque des revendications 1 à 4, dans lequel l'élément mobile (109, 401, 607, 611) comprend des régions électriquement conductrices (403, 405, 407, 409, 411, 413) qui présentent respectivement une largeur égale à la moitié d'une période et une distance respective entre les deux régions est égale à la moitié d'une période.

6. Dispositif de détection de position (101) selon l'une quelconque des revendications précédentes, dans lequel les supports (103, 303) présentent respectivement une région de détection (615) formée au voisinage des modules de détection (105, 107) et s'étendant le long du premier module (105) sur la distance prédéterminée (113) jusqu'au deuxième module de détection (107), région dans laquelle est disposé un autre module de détection (617a, 617b) destiné à détecter une position de l'élément mobile (109, 401, 607, 611), qui est conçu pour délivrer un signal de position lors de la détection de l'élément mobile (109, 401, 607, 611).

7. Dispositif de détection de position (101) selon la revendication 6, dans lequel l'élément mobile (109, 401, 607, 611) comprend une autre région électriquement conductrice (609, 613) qui est disposée en dessous des régions électriquement conductrices (403, 405, 407, 409, 411, 413) de la région de détection (615).

8. Système d'entraînement comportant des premier et deuxième systèmes de transport linéaires, comportant respectivement un élément de profilé de support (817) et un dispositif de détection de position (101) selon l'une quelconque des revendications précédentes, dans lequel le premier support du dispositif de détection de position (101) est disposé dans un espace de montage de l'élément de profilé de support du premier système de transport linéaire et le deuxième support du dispositif de détection de position (101) est disposé dans un espace de montage de l'élément de profilé de support du deuxième système de transport linéaire.

9. Système d'entraînement selon la revendication 8, dans lequel le système d'entraînement linéaire présente un dispositif de guidage (831) destiné à guider l'élément mobile.

10. Procédé de détection d'une position d'un élément mobile (109, 401, 607, 611) d'un dispositif d'entraînement au moyen d'un dispositif de détection de position (101) selon l'une quelconque des revendications précédentes, comprenant les étapes consistant à :
- déplacer (201) l'élément mobile le long des deux modules de détection (105, 107) sur la distance prédéterminée (113),
- mesurer (203) des signaux de position respectifs des deux modules de détection (105, 107) pendant le déplacement,
- mesurer (205) la distance prédéterminée en tant que distance de référence sur la base des signaux de position,
- déplacer l'élément mobile (109, 401, 607, 611) le long des deux supports (103, 303) sur ladite distance (605), et
- déterminer une valeur absolue de la distance entre les deux supports (103, 303) sur la base de la distance de référence.

11. Procédé selon la revendication 10, dans lequel les bobines d'excitation (311, 313) sont attaquées par l'impulsion d'excitation de manière à ce que la tension électrique soit induite dans les bobines de réception (315a, 315b), dans lequel la mesure des signaux de position consiste à analyser directement et à numériser immédiatement la tension de bobine induite.

12. Procédé selon la revendication 10 ou 11, dans lequel une orientation de l'élément mobile (109, 401, 607, 611) par rapport à une direction de déplacement est déterminée sur la base des signaux de position.

13. Programme informatique comprenant un code de programme destiné à mettre en oeuvré le procédé selon l'une quelconque des revendications 10 à 12 lorsque le programme informatique est exécuté sur un ordinateur.
